# EUROPEAN PATENT APPLICATION

(11) **EP 4 224 733 A1**
(43) Date of publication of application: **09.08.2023**
(21) Application number: 21874522.2
(22) Date of filing: 29.09.2021
(51) Int. Cl.: H04B 7/06

(54) **BEAM PROCESSING METHOD AND APPARATUS, AND RELATED DEVICE**

(30) Priority: 30.09.2020 CN 202011063399
(71) Applicant: Vivo Mobile Communication Co., Ltd., Dongguan, Guangdong 523863 (CN)
(72) Inventor: YANG, Yu, Dongguan, Guangdong 523863 (CN)
(74) Representative: Lavoix
(86) International application number: PCT/CN2021/121658
(87) International publication number: WO 2022/068867

(57) **Abstract**

This application discloses a beam processing method and apparatus, and a related device. The method includes: receiving first configuration information, where the first configuration information is used to indicate a candidate beam information set, the candidate beam information set includes candidate beam information sets of N object groups, at least one of the object groups includes at least two objects, each of the objects is a channel or a reference signal, and N is a positive integer; and receiving indication information, where the indication information is used to indicate beam information of the object group, and the beam information belongs to the candidate beam information set of the object group.

## Description

### CROSS-REFERENCE TO RELATED APPLICATIONS

This application claims priority to Chinese Patent Application No. 202011063399.X, filed in China on September 30, 2020, which is incorporated herein by reference in its entirety.

### TECHNICAL FIELD

This application relates to the field of communications technologies, and in particular, to a beam processing method and apparatus, and a related device.

### BACKGROUND

With development of communications technologies, an increasing number of channels and reference signals are transmitted by a communication system. Generally, after beam measurement and beam reporting, the network device may perform beam indication for downlink and uplink channels or reference signals, so as to establish beam links between the network device and the terminal, thereby implementing channel or reference signal transmission. At present, beam indication is usually performed separately for each channel and reference signal, resulting in relatively large signaling overheads.

### SUMMARY

Embodiments of this application provide a beam processing method and apparatus, and a related device, so as to resolve the problem of signaling for beam indication.

According to a first aspect, a beam processing method is provided, executed by a terminal and including:
receiving first configuration information, where the first configuration information is used to indicate a candidate beam information set, the candidate beam information set includes candidate beam information sets of N object groups, at least one of the object groups includes at least two objects, each of the objects is a channel or a reference signal, and N is a positive integer; and
receiving indication information, where the indication information is used to indicate beam information of the object group, and the beam information belongs to the candidate beam information set of the object group.

According to a second aspect, a beam processing method is provided, executed by a network device and including:
sending first configuration information, where the first configuration information is used to indicate a candidate beam information set, the candidate beam information set includes candidate beam information sets of N object groups, at least one of the object groups includes at least two objects, each of the objects is a channel or a reference signal, and N is a positive integer; and
sending indication information, where the indication information is used to indicate beam information of the object group, and the beam information belongs to the candidate beam information set of the object group.

According to a third aspect, a beam processing apparatus is provided, including:
a receiving module, configured to receive first configuration information, where the first configuration information is used to indicate a candidate beam information set, the candidate beam information set includes candidate beam information sets of N object groups, at least one of the object groups includes at least two objects, each of the objects is a channel or a reference signal, and N is a positive integer; where
the receiving module is further configured to receive indication information, where the indication information is used to indicate beam information of the object group, and the beam information belongs to the candidate beam information set of the object group.

According to a fourth aspect, a beam processing apparatus is provided, including:
a receiving module, configured to receive first configuration information, where the first configuration information is used to indicate a candidate beam information set, the candidate beam information set includes candidate beam information sets of N object groups, at least one of the object groups includes at least two objects, each of the objects is a channel or a reference signal, and N is a positive integer; where
the receiving module is further configured to receive indication information, where the indication information is used to indicate beam information of the object group, and the beam information belongs to the candidate beam information set of the object group.

According to a fifth aspect, a terminal is provided, where the terminal includes a processor, a memory, and a program or instructions stored in the memory and capable of running on the processor, and when the program or instructions are executed by the processor, the steps of the method according to the first aspect are implemented.

According to a sixth aspect, a network device is provided, where the network device includes a processor, a memory, and a program or instructions stored in the memory and capable of running on the processor, and when the program or instructions are executed by the processor, the steps of the method according to the second aspect are implemented.

According to a seventh aspect, a readable storage medium is provided, where a program or instructions are stored in the readable storage medium, and when the program or the instructions are executed by a processor, the steps of the method according to the first aspect are implemented, or the steps of the method according to the second aspect are implemented.

According to an eighth aspect, an embodiment of the application provides a chip, where the chip includes a processor and a communications interface, the communications interface is coupled to the processor, and the processor is configured to run a program or instructions of a network device to implement the method according to the second aspect.

In the embodiments of this application, the first configuration information is used to indicate a candidate beam information set, the candidate beam information set includes candidate beam information sets of N object groups, at least one of the object groups includes at least two objects, each of the objects is a channel or a reference signal, and N is a positive integer; and with indication information, the indication information is used to indicate beam information of the object group, and the beam information belongs to the candidate beam information set of the object group. In this way, multiple channels and reference signals can be divided into one or more object groups, and beam information is configured or indicated per object group, thereby reducing signaling overheads for beam indication.

### BRIEF DESCRIPTION OF DRAWINGS

FIG. 1 is a structural diagram of a network system to which the embodiments of this application are applicable;
FIG. 2 is a flowchart of a beam processing method according to an embodiment of this application;
FIG. 3 is a flowchart of another beam processing method according to an embodiment of this application;
FIG. 4 is a structural diagram of a beam processing apparatus according to an embodiment of this application;
FIG. 5 is a structural diagram of another beam processing apparatus according to an embodiment of this application;
FIG. 6 is a structural diagram of a communication device according to an embodiment of this application;
FIG. 7 is a structural diagram of a terminal according to an embodiment of this application; and
FIG. 8 is a structural diagram of a network device according to an embodiment of this application.

### DETAILED DESCRIPTION OF EMBODIMENTS

The following clearly and completely describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

In the specification and claims of this application, the terms such as "first" and "second" are intended to distinguish between similar objects but do not necessarily indicate a specific order or sequence. It should be understood that the data used in this way is interchangeable in appropriate circumstances so that the embodiments of this application can be implemented in other orders than the order illustrated or described herein, and "first" and "second" are usually for distinguishing same-type objects but not limiting the number of objects, for example, a first object may be one or multiple. In addition, "and/or" in this specification and claims indicates at least one of connected objects, and the symbol "/" generally indicates that the associated objects are in an "or" relationship.

It should be noted that technologies described in the embodiments of this application are not limited to a long term evolution (Long Term Evolution, LTE)/LTE-advanced (LTE-Advanced, LTE-A) system, and may also be used in various wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are usually used interchangeably. Techniques described herein may be used in the aforementioned systems and radio technologies, and may also be used in other systems and radio technologies. However, in the following descriptions, a new radio (New Radio, NR) system is described for an illustration purpose, and NR terms are used in most of the following descriptions, although these technologies may also be applied to other applications than an NR system application, for example, the 6th generation (6^{th} Generation, 6G) communications system.

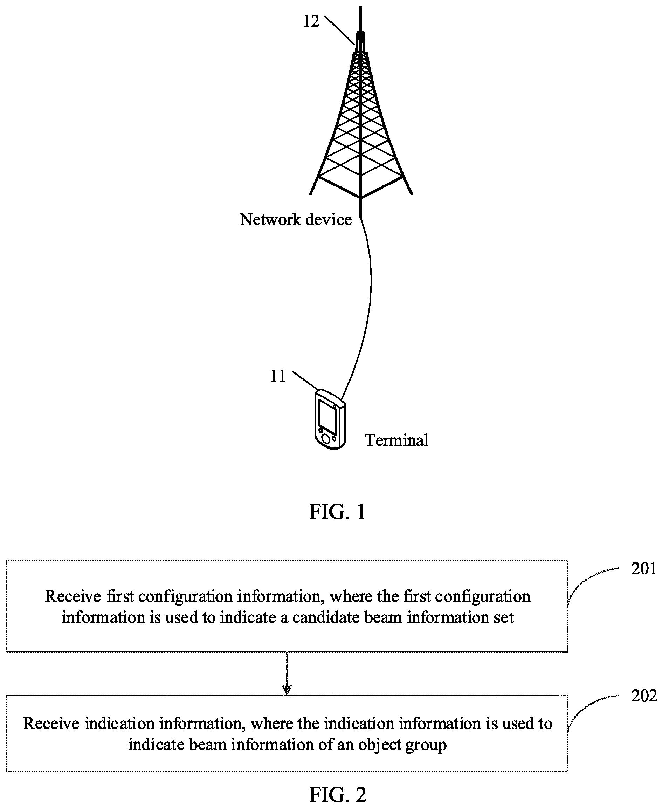

FIG. 1 is a block diagram of a wireless communication system to which the embodiments of this application are applicable. The wireless communication system includes a terminal 11 and a network-side device 12. The terminal 11 may also be referred to as a terminal device or user terminal (User Equipment, UE), and the terminal 11 may be a terminal-side device, such as a mobile phone, a tablet computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), a wearable device (Wearable Device) or vehicle user equipment (VUE), or pedestrian user equipment (PUE). The wearable device includes: a wrist band, earphones, glasses, or the like. It should be noted that a specific type of the terminal 11 is not limited in the embodiments of this application. The network-side device 12 may be a base station or a core network. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (eNB), a home NodeB, a home evolved NodeB, a WLAN access point, a Wi-Fi node, a transmission reception point (Transmission Reception Point, TRP), or another appropriate term in the art. Provided that a same technical effect is achieved, the base station is not limited to a specific technical term. It should be noted that in the embodiments of this application, the base station in the NR system is merely used as an example, and a specific type of the base station is not limited.

For ease of understanding, the following describes some content included in the embodiments of this application:

### I. Beam measurement and reporting:

Analog beamforming is based on full-bandwidth transmission, and an antenna element of each polarization direction on a panel of each high-frequency antenna array can transmit analog beams only in a time-division multiplexing manner. A beamforming weight of the analog beam is implemented by adjusting parameters of devices such as a phase shifter on the radio frequency front-end.

A polling manner is typically used for training of analog beamforming vectors, that is, the antenna element of each polarization direction of each antenna panel sends a training signal (that is, a candidate beamforming vector) sequentially at agreed time in a time-division multiplexing manner. A terminal feeds back a beam report after measurement, so that the network device can use the training signal to implement analog beam transmission for transmitting a next service. The content of the beam report generally includes identifiers of several optimal transmit beams and a measured received power of each transmit beam.

In beam measurement, the network device configures a reference signal (reference signal, RS) resource set (resource set) that includes at least one reference signal resource (resource), such as a synchronization signal block (Synchronization Signal and PBCH block, SSB) resource or a channel state information reference signal (Channel State Information-Reference Signal, CSI-RS). UE measures layer 1-reference signal received power (L1-reference signal received power, L1-RSRP) or layer 1-signal-to-noise and interference ratio (L1-Signal-to-Noise and Interference Ratio, L1-SINR) of each RS resource, and reports at least one optimal measurement result to the network. The report content includes an SSB resource indicator (Resource Indicator, RI) or CSI-RS resource indicator (CRI), and L1-RSRP/L1-SINR. The report content reflects at least one optimal beam and its quality, so that the network determines a beam used for channel or signal transmission with the UE.

### II. Beam indication (beam indication) mechanism

After beam measurement and beam reporting, the network may perform beam indication for downlink and uplink channels or reference signals, so as to establish beam links between the network and the UE to implement channel or reference signal transmission.

With regard to beam indication for physical downlink control channel (Physical Downlink Control Channel, PDCCH), the network configures K transmission configuration indicator (Transmission Configuration Indication, TCI) states for each control resource set (Control Resource Set, CORESET) by using radio resource control (Radio Resource Control, RRC) signaling. When K > 1, one TCI state is indicated or activated by medium access control control element (Medium Access Control Control Element, MAC CE); when K = 1, no additional MAC CE command is required. During PDCCH monitoring, the UE uses the same Quasi-colocation (Quasi-colocation, QCL) for all search spaces (search space) of a CORESET, that is, using the same TCI state for monitoring the PDCCH. The RS (such as a periodic CSI-RS resource, semi-persistent CSI-RS resource, or SSB) in the TCI state is spatially QCLed with the UE-specific (specific) PDCCH demodulation reference signal (Demodulation Reference Signal, DMRS) port (port). The UE may learn, based on the TCI state, which receive beam is used for receiving the PDCCH.

With regard to beam indication for a physical downlink shared channel (Physical Downlink Shared Channel, PDSCH), the network configures M TCI states by using RRC signaling, activates 2N TCI states by using a MAC CE command, and then notifies the TCI states by using an N-bit TCI field (field) in DCI. An RS corresponding to the TCI state is QCLed with a DMRS port of the PDSCH to be scheduled. The UE may learn, based on the TCI state, which receive beam is used for receiving the PDSCH.

With regard to beam indication for CSI-RS, when the CSI-RS type is periodic CSI-RS, the network configures QCL information for the CSI-RS resource by using RRC signaling. When a CSI-RS type is a semi-persistent CSI-RS, the network activates one CSI-RS resource from an RRC-configured CSI-RS resource set by using a MAC CE command and also indicates its QCL information. When a CSI-RS type is an aperiodic CSI-RS, the network configures QCL for a CSI-RS resource by using RRC signaling, and triggers the CSI-RS by using downlink control information (Downlink Control Information, DCI).

With regard to beam indication for physical uplink control channel (Physical Uplink Control Channel, PUCCH), the network configures spatial relation information (spatial relation information) for each PUCCH resource by using the PUCCH-SpatialRelationInfo parameter in RRC signaling. When a plurality of pieces of spatial relation information are configured for a PUCCH resource, one piece of the spatial relation information is indicated or activated by using a MAC CE. When only one piece of spatial relation information is configured for the PUCCH resource, no additional MAC CE command is required.

With regard to beam indication for physical uplink shared channel (Physical Uplink Shared Channel, PUSCH), when DCI carried by a PDCCH schedules the PUSCH and each SRI codepoint (codepoint) in a sounding reference signal resource indicator (Sounding Reference Signal, SRI) field of the DCI indicates one SRI, the SRI is used to indicate spatial relation information of the PUSCH.

With regard to beam indication for sounding reference signal (Sounding Reference Signal Resource Indicator, SRS), when an SRS type is periodic SRS, the network configures spatial relation information for an SRS resource by using RRC signaling. When the SRS is semi-persistent SRS, the network activates, by using a MAC CE command, one piece in a group of spatial relation information configured by using RRC signaling. When the SRS type is aperiodic SRS, the network configures spatial relation information for an SRS resource by using RRC signaling, and may further use a MAC CE command to update spatial relation information of an aperiodic SRS resource.

### III. Beam indication in a multi-transmission reception point (Transmission Reception Point, TRP) scenario

In a (multi)TRP scenario, a control information transmission mode may be divided into single (single)-DCI and multi-DCI. The former is to send DCI in one TRP to schedule data transmission for multiple TRPs, and the latter is to send DCI on multiple TRPs to respectively schedule data transmission for the TRPs.

When the DCI schedules the PDSCH, when a scheduling offset (scheduling offset) between the DCI and the PDSCH is less than or equal to a preset threshold, a default beam needs to be used for transmitting the PDSCH. The scheduling offset may be referred to as a time offset (time offset).

For multi-DCI based multi-TRP or multi-panel transmission (multi-DCI based multi-TRP/panel transmission), if TRP identification information (for example, CORESETPoolIndex) is configured, when the scheduling offset is less than or equal to a preset threshold, the UE assumes that the PDSCH DMRS port is QCLed with an RS in QCL information of a PDCCH in a control resource set with lowest index (CORESET with lowest index) configured with a same CORESETPoolIndex value.

Optionally, the CORESET with lowest index is a CORESET with lowest index in CORESETs that need to be monitored by the UE and that correspond to respective CORESETPoolIndex values in the latest slot (latest slot). The latest slot is a slot in which at least one CORESET associated with a corresponding CORESETPoolIndex exists in a serving cell active (serving cell active) bandwidth part (Bandwidth Part, BWP).

If the UE does not support multi-DCI based multi-TRP/panel transmission, regardless of how the CORESETPoolIndex is configured, the CORESET with lowest index is a CORESET with lowest index in the CORESETs that need to be monitored by the UE in the latest slot, and has nothing to do with CORESETPoolIndex.

For single-DCI based multi-TRP or multi-panel transmission (single-DCI based Multi-TRP/panel transmission), when the scheduling offset is less than or equal to the preset threshold, and after receiving a TCI state activation command for the UE specific PDSCH, the UE assumes that the PDSCH DMRS port uses a QCL parameter of a default (default) TCI state(s). That is, in the activated TCI state for PDSCH, a TCI state corresponding to the lowest codepoint is selected from TCI codepoints including two different TCI states.

Optionally, the foregoing beam information may be referred to as spatial relation information, spatial domain transmission filter (spatial domain transmission filter) information, spatial domain filter (spatial filter) information, TCI state information, QCL information, a QCL parameter, or the like. The downlink beam information may be usually represented by TCI state information or QCL information. Uplink beam information may be usually represented by using spatial relation information.

Optionally, the antenna panel may also be referred to as: an antenna group, an antenna port group, an antenna set, an antenna port set, a beam set, a beam sub-set, an antenna array, an antenna port array, an antenna sub-array, an antenna port sub-array, a logical entity, an entity, an antenna entity, or the like.

The following describes in detail a beam processing method provided in the embodiments of this application by using specific embodiments and application scenarios thereof with reference to the accompanying drawings.

Referring to FIG. 2, FIG. 2 is a flowchart of a beam processing method according to an embodiment of this application. The method is executed by a terminal, and as shown in FIG. 2, includes the following steps.

Step 201: Receive first configuration information, where the first configuration information is used to indicate a candidate beam information set, the candidate beam information set includes candidate beam information sets of N object groups, at least one of the object groups includes at least two objects, each of the objects is a channel or a reference signal, and N is a positive integer.

Step 202: Receive indication information, where the indication information is used to indicate beam information of the object group, and the beam information belongs to the candidate beam information set of the object group.

In this embodiment of this application, the candidate beam information set includes a beam information set of multiple candidate common beams (common beam). The network device may configure a candidate beam set for each object group, where each object group may use an independent candidate beam set, or multiple object groups may share one candidate beam set, which is not further limited herein.

It should be noted that when one piece of beam information is used for uplink and downlink, it can be understood in this case that all objects are classified into one object group. Certainly, it can alternatively be understood that all objects are not grouped, and all objects use beam information of one common beam. Indicating beam information of the object group may be understood as indicating beam information of one or more object groups. Indicating beam information of the object group may be understood as indicating beam information of a common beam of an object group; or may be understood as indicating a common beam of a target object group, and the object group may use the common beam for uplink or downlink transmission.

During grouping of objects, each object group may include only a channel, or only a reference signal, or both a channel and a reference signal. The channel may be understood as a control channel, such as PDCCH or PUCCH. An object in the object group may be used for uplink or downlink. When the object is used for uplink, it can be understood as an uplink object and may also be referred to as an object used for uplink transmission; when the object is used for downlink, it can be understood as a downlink object and may also be referred to as an object for downlink transmission. One object group may include only an uplink object, may include only a downlink object, or may include both an uplink object and a downlink object, which is not further limited herein.

The beam information indicated by the indication information may be understood as beam information of a common beam. For example, after beam information of an object group is indicated, all objects in the object group may use the beam information.

In this embodiment of this application, the first configuration information is used to indicate a candidate beam information set, the candidate beam information set includes candidate beam information sets of N object groups, at least one of the object groups includes at least two objects, each of the objects is a channel or a reference signal; and with indication information, the indication information is used to indicate beam information of the object group, and the beam information belongs to the candidate beam information set of the object group. In this way, multiple channels and reference signals can be divided into one or more object groups, and beam information is configured or indicated per object group, thereby reducing signaling overheads for beam indication.

Optionally, in an embodiment, the first configuration information may be carried in target configuration information, and the target configuration information is other configuration information than physical downlink shared channel PDSCH configuration information.

For example, in an embodiment, the target configuration information includes at least one of the following: configuration information of a bandwidth part (Bandwidth Part, BWP), configuration information of a cell (cell), configuration information of a cell group (cell group), configuration information of a component carrier (component carrier, CC) list (list), configuration information of an uplink CC list, and configuration information of a downlink CC list.

The configuration information of the downlink CC list may be simultaneousTCI-UpdateList, and the configuration information of the uplink CC list may be simultaneous Spatial-UpdatedList.

It should be noted that grouping of object groups may include various cases. For example, in an embodiment, the N object groups satisfy any one of the following:
condition 1: the N object groups include one object group, and the object group includes an uplink object and a downlink object;
condition 2: the N object groups include at least two object groups, and at least one of the object groups includes an uplink object and a downlink object;
condition 3: the N object groups include two object groups, one object group includes an uplink object, and the other object group includes a downlink object;
condition 4: the N object groups include N1 object groups and N2 object groups, each of the N1 object groups includes an uplink object, and each of the N2 object groups includes a downlink object, where N1 and N2 are both positive integers, a sum of N1 and N2 is N, and N is greater than 2;
condition 5: each of the N object groups includes only an uplink object; and
condition 6: each of the N object groups includes only a downlink object.

With regard to the condition 1, it can be understood that there is only one object group, or there is no object group. The object used for uplink and the object used for downlink share same beam information, and there is only one piece of beam information.

With regard to the condition 2, it can be understood that multiple objects are divided into multiple object groups, where some or all object groups include objects used for uplink and objects used for downlink, and an object for uplink and an object for downlink in the object group share the same beam information. When all object groups include objects for uplink and objects for downlink, it can be understood that an uplink object and a downlink object use the same beam information and there is more than one piece of beam information, where each object group corresponds to one piece of beam information.

With regard to the condition 3, it can be understood that multiple objects are divided into two object groups according to a link direction, all uplink objects being divided into one object group and all downlink objects being divided into one object group. In this case, it can be understood that the uplink objects and the downlink objects use respective beam information, the uplink objects use same beam information, and the downlink objects use same beam information.

With regard to the condition 4, it can be understood as that multiple objects are first divided according to the link direction, and all objects in at least one link direction are further divided into at least two object groups.

With regard to the condition 5, it can be understood that only uplink objects are divided into one or more object groups.

With regard to the condition 6, it can be understood that only downlink objects are divided into one or more object groups.

Optionally, in an embodiment, the first configuration information is configuration information of a transmission configuration indicator state TCI state pool.

It should be understood that after the network configures the TCI state pool and before a TCI state is indicated by using the indication information, default beam information is used, for example, an SSB measured by the UE during initial access.

In this embodiment of this application, the TCI state pool includes at least one of the following:
TCI states; and
at least one TCI state group, where the TCI state group includes at least two TCI states; where
each TCI state in the TCI state pool includes at least one source reference signal RS.

It should be understood that the TCI state pool including TCI states may be understood as the TCI state pool including ungrouped TCI states, in other words, the TCI state pool includes independent TCI states. The independent TCI state may include at least one of the following:
TCI state only for uplink;
TCI state only for downlink; and
TCI state for uplink and downlink.

The at least one TCI state group includes at least one of the following:
a first TCI state group, where the first TCI state group includes at least two TCI states only for uplink;
a second TCI state group, where the second TCI state group includes at least two TCI states only for downlink;
a third TCI state group, where the third TCI state group includes at least one TCI state for uplink and at least one TCI state for downlink; and
a fourth TCI state group, where the fourth TCI state group includes at least two TCI states for uplink and downlink.

It should be understood that the number of first TCI state groups, the number of second TCI state groups, the number of third TCI state groups, and the number of fourth TCI state groups can be set according to actual needs, and there can be one or more specific TCI state groups. For example, one or more first TCI state groups may be included, one or more second TCI state groups may be included, one or more third TCI state groups may be included, and one or more fourth TCI state groups may be included.

Optionally, in an embodiment, for an object group satisfying the condition 1, the TCI state pool may include TCI states, and each TCI state in the TCI state pool includes one source reference signal RS.

For an object group satisfying the condition 2, the TCI state pool may include at least one of the following:
TCI states; and
at least one TCI state group, where each TCI state group includes at least two TCI states; where
each TCI state in the TCI state pool includes at least one source reference signal RS.

For an object group satisfying the condition 3, objects for uplink and objects for downlink may use a same TCI state pool, or use different TCI state pools. When the same TCI state pool is used, the TCI state pool may include at least one of the following:
TCI states; and
at least one TCI state group, where each TCI state group includes at least two TCI states; where
each TCI state in the TCI state pool includes one or more source reference signal RSs; when the TCI state includes at least two source RSs, the at least two source RSs include a source RS for uplink and a source RS for downlink.

For an object group satisfying the condition 4, objects used for uplink and objects used for downlink may use a same TCI state pool, or use different TCI state pools. When the same TCI state pool is used, the TCI state pool may include at least one of the following:
TCI states; and
at least one TCI state group, where each TCI state group includes at least one TCI state for uplink and at least one TCI state for downlink, or includes at least two TCI states for uplink and downlink, or includes at least two TCI states for uplink, or includes at least two TCI states for downlink.

Each TCI state in the TCI state pool includes one or more source reference signal RSs; when the TCI state includes at least two source RSs, the at least two source RSs include at least one source RS for uplink and at least one source RS for downlink, or include at least two source RSs for uplink and downlink, or include at least two source RSs for uplink, or include at least two source RSs for downlink.

In a case that different TCI state pools are used, a TCI state pool for uplink and a TCI state pool for downlink may be included. The TCI state pool for uplink may include at least one of the following: TCI states and a TCI state group, where each TCI state group includes multiple TCI states. The TCI state pool for downlink may also include at least one of the following: TCI states and a TCI state group, where each TCI state group includes multiple TCI states.

Optionally, in an embodiment, in a case that the TCI state pool includes TCI states for uplink, at least one TCI state for uplink includes a target parameter or is associated with a target parameter; where
the target parameter includes at least one of the following: physical uplink shared channel port (port) information, precoding information, power control parameter information, and uplink timing (UL timing) information.

Optionally, the power control parameter information may include at least one of the following: P0, alpha, pathloss reference signal (pathloss RS), and closed loop index (closed loop index).

Further, in this embodiment of this application, the method further includes:
determining the target parameter based on a TCI state indicated by the indication information.

In this embodiment, when the indicated TCI state includes the target parameter, or the TCI state is associated with the target parameter, the target parameter is also indicated when the TCI state is being indicated. Optionally, determining the target parameters based on the source RS in the indicated TCI state may also be understood as using the source RS or a downlink RS corresponding to the source RS as a pathloss RS. Certainly, in other embodiments, the target parameter may alternatively be activated from a pool of the target parameters.

Optionally, in an embodiment, a TCI state indicated by the indication information includes:
a first source RS, used for determining that the TCI state is at least one of an uplink TCI state and a downlink TCI state, and the first source RS is used to indicate beam information; and
a second source RS, used for determining that the TCI state is a downlink TCI state, and the second source RS is used to indicate at least one of a time domain parameter and a frequency domain parameter.

The first source RS may be understood that the beam information indicated by the first source RS can be used only for uplink, or only for downlink, or for both uplink and downlink. The second source RS may be understood that the time domain parameter and frequency domain parameter indicated by the second source RS can be understood as being used only for determining downlink.

Optionally, the indication information is used to indicate at least one TCI state, and the at least one TCI state is used for determining beam information of the N object groups.

In this embodiment of this application, the TCI state indicated by the indication information may be carried in one first command, or may be carried in multiple first commands. The first command may be MAC CE or DCI.

Optionally, the indication information is further used to indicate type (type) information of a first TCI state, the first TCI state belongs to the at least one TCI state, and a source RS included in the first TCI state corresponds to a plurality of types or has no corresponding type.

In an embodiment, assuming that RRC signaling configures the source RS in the TCI state corresponding to multiple types (such as QCL-Type), the type corresponding to the TCI state needs to be further indicated using the first indication information. In another embodiment, assuming that RRC signaling configures the source RS in the TCI state corresponding to no type, the type corresponding to the TCI state needs to be further indicated using the first indication information.

Optionally, the beam information is in one-to-one correspondence to the object groups.

In an embodiment, the at least one TCI state includes at least one of the following:
N3 second TCI states, where each of the second TCI states is used for determining one piece of beam information;
N4 third TCI states, where each of the third TCI states is used for determining N5 pieces of beam information; and
N6 TCI state groups, where each of the TCI state groups is used for determining N7 pieces of beam information; where
N3, N4, N6, and N7 are all positive integers, and N5 is an integer greater than 1.

In order to better understand this application, the following describes the indicated TCI state for the object group satisfying different conditions.

When the object group satisfies the condition 1, the network device may indicate one TCI state using the MAC CE, and the indicated TCI state is used for all or part of objects for downlink and uplink. The TCI state is used for determining beam information for these objects. For example, objects to which the indicated TCI state can be applied include: objects other than CSI-RS used for beam management and SRS used for beam management. Optionally, in an embodiment, the indicated TCI state can be applied to a channel type configured with a preset identifier, or a channel type configured in a group, for example, if configuration information of a channel has a preset identifier, the indicated TCI state may be used for this channel.

In a case that the object group satisfies the condition 2, the network device may indicate multiple pieces of beam information using MAC CE, for example, indication information carried by the MAC CE indicates any one of the following:
activating multiple TCI states, where each TCI state includes one source RS, optionally, a dedicated bit may be used to indicate whether a TCI state is present;
activating one TCI state that includes multiple source RSs; and
activating a TCI state group.

It should be understood that in this embodiment of this application, multiple MAC CEs may be used to indicate activating multiple TCI states respectively.

In this embodiment of this application, channels may be grouped, and each group of channels uses one piece of beam information.

For example, a preset identifier (group identifier, index, or the like) may be included in configuration information of each channel, corresponding to one of the indicated multiple pieces of beam information.

For example, the network may use RRC signaling to configure channel group information, each group includes at least one channel, and each group of channels corresponds to one common beam in the indicated multiple pieces of beam information.

It should be understood that channels other than the channel group do not use the common beam, and a beam indication mechanism is used for performing independent indication for such channels.

In a case that the object group satisfies the condition 3, the network device may indicate one piece of beam information separately for an object for uplink and an object for downlink using MAC CE, for example, indication information carried by the MAC CE indicates any one of the following:
activating two TCI states, where each TCI state includes one source RS, for DL or UL;
activating one TCI state that includes two source RSs, for DL and UL separately; and
activating a TCI state group, where TCI states in the TCI state group are used for DL and UL separately.

One MAC CE or two MAC CEs may be used to indicate activating two TCI states.

In this embodiment of this application, channels may be grouped, and each group of channels uses one piece of beam information.

For example, downlink and uplink channels are separately configured with different group identifiers or configured in different groups.

For example, the protocol stipulates that the indicated downlink common beam is used for all or part of downlink channels, and the indicated uplink common beam is used for all or part of uplink channels.

It should be understood that channels other than the channel group do not use the common beam, and a beam indication mechanism is used for performing independent indication for such channels.

In a case that the object group satisfies the condition 4, the network device may indicate, using MAC CE, at least one piece of beam information for uplink objects and at least one piece of beam information for downlink objects. For example, the indication information carried by the MAC CE indicates any one of the following:
activating multiple TCI states, where each TCI state includes one source RS, used for determining one piece of beam information for DL or UL;
activating multiple TCI state groups, where TCI states in each TCI state group is used for DL or UL, and each TCI state in the TCI state group may include one or more source RSs; or each TCI state group is used for determining one piece of beam information for DL and one piece of beam information for UL; and
activating one TCI state group, where TCI states in the TCI state group include multiple source RSs, and the TCI state is used for uplink or downlink; or the TCI state is used for determining one piece of beam information for DL and one piece of beam information for UL.

In this embodiment of this application, channels may be grouped, and each group of channels uses one piece of beam information.

For example, downlink and uplink channels are separately configured with multiple different group identifiers or configured in multiple different groups.

For example, the protocol stipulates that the indicated downlink common beam is used for all or part of downlink channel groups, and the indicated uplink common beam is used for all or part of uplink channel groups. The uplink channel group may include an uplink control channel group and an uplink traffic channel group. The downlink channel group may include a downlink control channel group and a downlink traffic channel group.

It should be understood that channels other than the channel group do not use the common beam, and a beam indication mechanism is used for performing independent indication for such channels.

In a case that the object group satisfies the condition 5, the network device may indicate at least one piece of beam information for an uplink object using MAC CE. For example, the indication information carried by the MAC CE indicates any one of the following:
activating at least one TCI state, where each TCI state includes one source RS, used for determining one piece of beam information for UL; and
activating one TCI state group, where each TCI state in the TCI state group includes at least one source RS, used for determining at least one piece of beam information for UL.

In this embodiment of this application, uplink channels may be grouped, and each group of uplink channels uses one piece of beam information.

For example, the uplink channel is configured with at least one group identifier or configured in one or more different groups.

For example, the protocol stipulates that the indicated uplink common beam is used for all or part of uplink channel groups. The uplink channel group may include an uplink control channel group and an uplink traffic channel group.

It should be understood that uplink channels other than the uplink channel group do not use the common beam, and a beam indication mechanism is used for performing independent indication for such channels.

In a case that the object group satisfies the condition 6, the network device may indicate at least one piece of beam information for a downlink object using MAC CE. For example, the indication information carried by the MAC CE indicates any one of the following:
activating at least one TCI state, where each TCI state includes one source RS, used for determining one piece of beam information for DL; and
activating one TCI state group, where each TCI state in the TCI state group includes at least one source RS, used for determining at least one piece of beam information for DL.

In this embodiment of this application, downlink channels may be grouped, and each group of downlink channels uses one piece of beam information.

For example, the downlink channel is configured with at least one group identifier or configured in one or more different groups.

For example, the protocol stipulates that the indicated downlink common beam is used for all or part of downlink channel groups. The downlink channel group may include a downlink control channel group and a downlink traffic channel group.

It should be understood that downlink channels other than the downlink channel group do not use the common beam, and a beam indication mechanism is used for performing independent indication for such channels.

Optionally, when the TCI state is used for a group of CCs, in an embodiment, the TCI state indicated by the indication information satisfies any one of the following:
in a case that the indication information indicates one TCI state of a downlink CC, the TCI state is used for all CCs in a downlink CC list to which the downlink CC belongs;
in a case that the indication information indicates one TCI state of an uplink CC, the TCI state is used for all CCs in an uplink CC list to which the uplink CC belongs;
in a case that the indication information indicates one TCI state of a CC, the TCI state is used for all CCs in a CC list to which the CC belongs;
in a case that the indication information indicates at least two TCI states of a downlink CC, the at least two TCI states are used for different object groups on all CCs in a downlink CC list to which the downlink CC belongs;
in a case that the indication information indicates at least two TCI states of an uplink CC, the at least two TCI states are used for different object groups on all CCs in an uplink CC list to which the uplink CC belongs; and
in a case that the indication information indicates at least two TCI states of a CC, the at least two TCI states are used for different object groups on all CCs in a CC list to which the CC belongs.

It should be understood that the TCI state indicated by the indication information may be a TCI state of any CC in the CC list, the uplink CC list, or the downlink CC list, or may be a specific CC, such as a reference CC. The CC list can be understood as a list that does not distinguish between uplink and downlink, and a CC in the CC list can be understood as either a downlink CC or an uplink CC.

In this embodiment of this application, the terminal may alternatively report capability information to the network device, where the capability information includes a radio frequency capability supported by the terminal, for example, may include whether to support intra-band (intra-band) and inter-band (inter-band) use of the same beam information.

Based on the reported capability information, the network device may configure information about a CC list for which beam information is simultaneously updated. Optionally, a downlink CC list and an uplink CC list may be configured independently, or the CC list may be configured to include downlink CCs and uplink CCs.

Optionally, when the TCI state is used for multi(multi)-TRP, the TCI state pool is associated with at least one piece of transmission-reception point identification information.

The TCI state pool being associated with one transmission-reception point identification information may be understood as a TRP corresponding to the transmission-reception point identification information is independently configured with a TCI state pool. The TCI state pool being associated with at least two pieces of transmission-reception point identification information may be understood as TRPs corresponding to the at least two pieces of transmission-reception point identification information share one TCI state pool.

In an embodiment, in a case that the TCI state pool is associated with at least two pieces of transmission-reception point identification information, the TCI state pool satisfies at least one of the following:
a TCI state corresponds to one piece of transmission-reception point identification information;
a TCI state includes a source RS corresponding to the at least two pieces of transmission-reception point identification information; and
each TCI state group includes TCI states corresponding to the at least two pieces of transmission-reception point identification information.

In this embodiment of this application, when the network indicates a common beam corresponding to multiple TRPs, the following cases may be included:
multiple TRPs may share a MAC CE command, and a common beam corresponding to the TRPs is determined based on a TCI state activated in the MAC CE command or based on multiple source RSs in the TCI state; and
for each TRP, a different MAC CE may be used to indicate a common beam corresponding to the TRP.

Further, in an embodiment, all objects in the object group correspond to same transmission-reception point identification information.

That is, in this embodiment of this application, channel grouping can make channels in each group to correspond to one piece of transmission-reception point identification information.

Optionally, a grouping manner for the object group may be set according to actual needs, for example, the object group is determined based on at least one of the following: control resource set, link direction, and channel type.

In this embodiment of this application, the link direction may include uplink and downlink, for example, uplink channels and reference signals may be divided into one object group, and downlink channels and reference signals may be divided into one object group. The channel type may include a traffic channel and a control channel. For example, all traffic channels may be divided into one object group, and all control channels may be divided into one object group. Further, the object group may alternatively be obtained through division based on both the link direction and channel type. In this case, four object groups can be included, for example, an object group corresponding to an uplink traffic channel, an object group corresponding to an uplink control channel, an object group corresponding to a downlink traffic channel, and an object group corresponding to a downlink control channel.

It should be understood that grouping of objects may be stipulated through a protocol, or grouping of objects may be configured by the network, which is not further limited herein.

Optionally, in an embodiment, the N object groups include a first object group, and the first object group satisfies any one of the following:
the first object group includes a control channel carried by a first control resource set, and the control channel carried by the first control resource set includes a group common control channel;
the first object group includes a control channel carried by a second control resource set, and the control channel carried by the second control resource set includes only a dedicated control channel; and
the first object group includes a target control channel and a target object, the target control channel is a control channel carried by at least one third control resource set, and the target object includes at least one of a channel scheduled by the target control channel, a reference signal scheduled by the target control channel, and a feedback channel corresponding to the target control channel.

In this embodiment of this application, the first object group may be understood as an object group obtained through division based on a control resource set. Specifically, the first object group may be obtained in three different grouping manners corresponding to the first control resource set, the second control resource set, and the third control resource set. Optionally, at least one of the first control resource set, the second control resource set, and the third control resource set may be referred to as a second-type control resource set. A control resource set other than the first control resource set, the second control resource set, and the third control resource set may be referred to as a first-type control resource set. An existing beam indication manner may be used for the first-type control resource set, or the foregoing indication information may be used to indicate beam information for a group to which the first-type control resource set belongs. Using the existing beam indication manner can be understood as indicating beam information using MAC CE.

Optionally, indicating beam information for a control resource set may be understood as indicating beam information for a control channel carried by the control resource set, or indicating beam information for a target object associated with the control channel carried by the control resource set. The following uses the first target group as an example to describe in detail a manner of indicating beam information for the second-type control resource set.

Optionally, the indication information includes a fourth TCI state, the fourth TCI state is used for determining beam information of the first object group, and the fourth TCI state is carried in a target control resource set or a MAC CE command.

The target control resource set satisfies at least one of the following:
a control channel carried by the target control resource set belongs to a second object group, beam information corresponding to the target control resource set is indicated by the indication information, and the second object group is any object group in the N object groups other than the first object group; and
a control channel carried by the target control resource set does not belong to the N object groups, and beam information corresponding to the target control resource set is indicated by a MAC CE command.

In this embodiment of this application, the second object group may be understood as an object group obtained through grouping based on any control resource set in the second-type control resource set, or may be understood as an object group obtained through grouping in other manners. In this case, DCI in the target control resource set may be used to indicate the beam information of the first object group. The second object group may include at least one of the following:
a control channel carried by one or more of the target control resource sets;
at least one of a target control channel carried by the target control resource set, a channel scheduled by the target control channel, a reference signal scheduled by the target control channel, and a feedback channel corresponding to the target control channel; and
a control channel carried by another control resource set than the target control resource set, where DCI in the another control resource set is not used to indicate the beam information of the first target group.

It should be understood that, in this embodiment, the beam information of the target control resource set may be indicated by the DCI, or indicated by a MAC CE.

The control channel carried by the target control resource set does not belong to the N object groups. It can be understood that control channels carried by the target control resource set are not grouped. In this case, the target control resource set can be understood as the first-type control resource set. The beam information of the target control resource set may be indicated by an existing beam indication mechanism.

Optionally, in an embodiment, objects in the object group include at least one of the following:
CSI-RS for obtaining channel state information CSI (CSI-RS for CSI acquisition);
CSI-RS for tracking (CSI-RS for tracking);
sounding reference signal SRS for antenna switching (SRS for antenna switching);
SRS for codebook (SRS for codebook);
SRS for non-codebook (SRS for non-codebook); and
RS for beam failure detection.

In this embodiment of the application, all the objects included in the object group may use a common beam of the object group, and in a case that the object group includes a CSI-RS for beam management (CSI-RS for beam management) or an SRS for beam management, the CSI-RS or SRS for beam management does not use the common beam of the target group.

It should be understood that, in an embodiment, in a case that objects in the object group include the RS for beam failure detection, the object group further includes a control channel.

Optionally, the beam information satisfies at least one of the following:
the beam information is used only for a first object in a corresponding object group; and
the beam information is used for all objects in a corresponding object group; where
no TCI state, quasi-co-located QCL information, or spatial relation information is configured for the first object.

In an embodiment, for the CSI-RS included in the object group, when the CSI-RS is used for CSI measurement or tracking (such as tracking CSI-RS, TRS), if the network configures no TCI state or QCL information for RS resources, a common beam is used. For example, for an aperiodic CSI-RS resource or an aperiodic CSI report triggered using DCI by the network, if the network configures no TCI state information for all CSI-RS resources associated with report settings or configures no TCI state information for the aperiodic CSI-RS resource, the CSI-RS resources use the common beam. If the network configures TCI state information or QCL information for the CSI-RS resource, beam information of the CSI-RS resource is determined according to the configuration information.

In another embodiment, regardless of whether the network configures TCI state information or QCL information for the CSI-RS resource, only a current common beam of the object group is used for measurement of these CSI-RS resources.

It should be understood that a case of using the current common beam of the object group by the SRS in the object group may be the same as that by the CSI-RS. For details, reference may be made to the description of the CSI-RS, and details are not repeated herein.

Optionally, the indication information is carried in a first medium access control control element MAC CE or downlink control information DCI.

If the indication information is carried on the first MAC CE, it can be understood that the first MAC CE uses the indication information to indicate the common beam of the object group.

If the indication information is carried by the DCI, it can be understood that the DCI uses the indication information to indicate the common beam of the object group. In this embodiment of this application, before the step of receiving the indication information, the method may further include:
receiving a second MAC CE, where the second MAC CE is used to activate M TCI states; where
M is a positive integer, and in a case that M is greater than 1, the indication information is carried in the DCI, and the indication information is used to indicate one TCI state in the M TCI states.

In this embodiment, one or more TCI states may be first activated using the second MAC CE, and then one TCI state in the activated M TCI states may be indicated using DCI. It should be understood that when M is 1, the TCI state indicated by the DCI may be omitted, and one activated TCI state indicated by the second MAC CE is directly used as the TCI state of the target group.

Further, the method further includes:
determining that a TCI state of a second object is one TCI state in the M TCI states; where
the second object is a CSI-RS for obtaining channel state information CSI or a CSI-RS for tracking.

In this embodiment of this application, for the CSI-RS for obtaining channel state information CSI and the CSI-RS for tracking, the TCI state information of the CSI-RS resources can be configured to be an activated TCI state, or the activated TCI state can be used as the TCI state information of the CSI-RS resources. Further, the UE may perform measurement on M CSI-RSs for CSI and/or M TRS resources, so as to obtain CSI information and/or time-frequency information corresponding to M activated TCI states.

It should be understood that the first MAC CE may be a MAC CE format (format) dedicated to activation/updating of the TCI state; or may be a MAC CE for indicating other functions, that is, a conventional MAC CE, for example, may be a MAC CE for activating a PDCCH TCI state or a MAC CE for activating a PUCCH spatial relation; or may be a MAC CE for reusing a TCI state of an activated control resource set. Further, the TCI state activated/updated by the MAC CE is further used to control all or part of channels on a CC in which a control resource set is located.

Optionally, in an embodiment, when the first MAC CE is a MAC CE for indicating other functions, the method further includes:
receiving enabling information, where the enabling information is used to indicate whether the first MAC CE is used to carry the indication information.

In this embodiment, when the enabling information indicates that the first MAC CE is used to carry the indication information, the first MAC CE indicating other functions is used to indicate the common beam of the object group. When the enabling information indicates that the MAC CE is not used to carry the indication information, the first MAC CE is used to indicate other functions. The enabling information indicating that the first MAC CE is used to carry the indication information can be understood that the enabling information enables a common beam mode, which is also referred to as a unified (unified) TCI mode, or a joint (joint) TCI mode, or a common (common) TCI mode.

Optionally, in an embodiment, first-type QCL information included in the TCI state is used for at least one of a downlink channel and a downlink RS of the target group, and second-type QCL information included in the TCI state is used for at least one of a downlink channel, an uplink channel, a downlink RS, and an uplink RS of the object group, where the first-type QCL information is at least one of time domain parameter information and frequency domain parameter information, and the second-type QCL information is space domain parameter information.

In this embodiment of the application, when the network indicates a TCI state and uses the TCI state for DL and/or UL channels or RSs, the QCL type indicated in the common beam indication satisfies at least one of the following:
in a case of DL channel or RS, using QCL-TypeA and QCL-TypeD information in the TCI state; and
in a case of UL channel or RS, using only QCL-TypeD information in the TCI state.

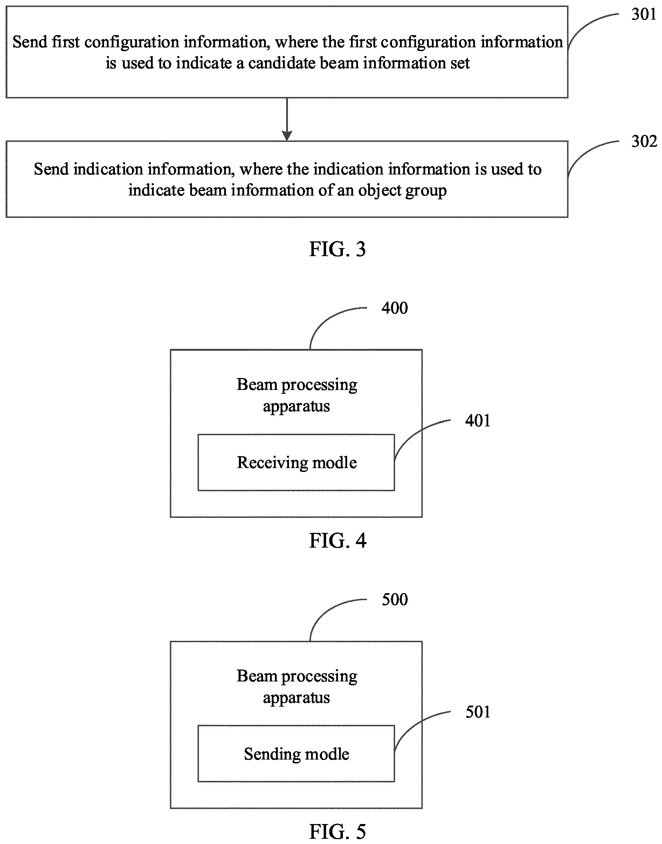

Referring to FIG. 3, FIG. 3 is a flowchart of another beam processing method according to an embodiment of this application. The method is executed by a network device, and as shown in FIG. 3, includes the following steps.

Step 301: Send first configuration information, where the first configuration information is used to indicate a candidate beam information set, the candidate beam information set includes candidate beam information sets of N object groups, at least one of the object groups includes at least two objects, each of the objects is a channel or a reference signal, and N is a positive integer.

Step 302: Send indication information, where the indication information is used to indicate beam information of the object group, and the beam information belongs to the candidate beam information set of the object group.

Optionally, the first configuration information is carried in target configuration information, and the target configuration information is other configuration information than physical downlink shared channel PDSCH configuration information.

Optionally, the target configuration information includes at least one of the following: configuration information of a bandwidth part BWP, configuration information of a cell, configuration information of a cell group, configuration information of a component carrier CC list, configuration information of an uplink CC list, and configuration information of a downlink CC list.

Optionally, the N object groups satisfy any one of the following:
the N object groups include one object group, and the object group includes an uplink object and a downlink object;
the N object groups include at least two object groups, and at least one of the object groups includes an uplink object and a downlink object;
the N object groups include two object groups, one object group includes an uplink object, and the other object group includes a downlink object;
the N object groups include N1 object groups and N2 object groups, each of the N1 object groups includes an uplink object, and each of the N2 object groups includes a downlink object, where N1 and N2 are both positive integers, a sum of N1 and N2 is N, and N is greater than 2;
each of the N object groups includes only an uplink object; and
each of the N object groups includes only a downlink object.

Optionally, the first configuration information is configuration information of a transmission configuration indicator state TCI state pool.

Optionally, the TCI state pool includes at least one of the following:
TCI states; and
at least one TCI state group, where the TCI state group includes at least two TCI states; where
each TCI state in the TCI state pool includes at least one source reference signal RS.

Optionally, at least one TCI state group includes at least one of the following:
a first TCI state group, where the first TCI state group includes at least two TCI states only for uplink;
a second TCI state group, where the second TCI state group includes at least two TCI states only for downlink;
a third TCI state group, where the third TCI state group includes at least one TCI state for uplink and at least one TCI state for downlink; and
a fourth TCI state group, where the fourth TCI state group includes at least two TCI states for uplink and downlink.

Optionally, in a case that the TCI state pool includes TCI states for uplink, at least one TCI state for uplink includes a target parameter or is associated with a target parameter; where
the target parameter includes at least one of the following: physical uplink shared channel port information, precoding information, power control parameter information, and uplink timing information.

Optionally, the method further includes:
determining the target parameter based on a TCI state indicated by the indication information.

Optionally, a TCI state indicated by the indication information includes:
a first source RS, used for determining that the TCI state is at least one of an uplink TCI state and a downlink TCI state, and the first source RS is used to indicate beam information; and
a second source RS, used for determining that the TCI state is a downlink TCI state, and the second source RS is used to indicate at least one of a time domain parameter and a frequency domain parameter.

Optionally, the indication information is used to indicate at least one TCI state, and the at least one TCI state is used for determining beam information of the N object groups.

Optionally, the indication information is further used to indicate type information of a first TCI state, the first TCI state belongs to the at least one TCI state, and a source RS included in the first TCI state corresponds to a plurality of types or has no corresponding type.

Optionally, the beam information is in one-to-one correspondence to the object groups.

Optionally, the at least one TCI state includes at least one of the following:
N3 second TCI states, where each of the second TCI states is used for determining one piece of beam information;
N4 third TCI states, where each of the third TCI states is used for determining N5 pieces of beam information; and
N6 TCI state groups, where each of the TCI state groups is used for determining N7 pieces of beam information; where
N3, N4, N6, and N7 are all positive integers, and N5 is an integer greater than 1.

Optionally, a TCI state indicated by the indication information satisfies any one of the following:
in a case that the indication information indicates one TCI state of a downlink CC, the TCI state is used for all CCs in a downlink CC list to which the downlink CC belongs;
in a case that the indication information indicates one TCI state of an uplink CC, the TCI state is used for all CCs in an uplink CC list to which the uplink CC belongs;
in a case that the indication information indicates one TCI state of a CC, the TCI state is used for all CCs in a CC list to which the CC belongs;
in a case that the indication information indicates at least two TCI states of a downlink CC, the at least two TCI states are used for different object groups on all CCs in a downlink CC list to which the downlink CC belongs;
in a case that the indication information indicates at least two TCI states of an uplink CC, the at least two TCI states are used for different object groups on all CCs in an uplink CC list to which the uplink CC belongs; and
in a case that the indication information indicates at least two TCI states of a CC, the at least two TCI states are used for different object groups on all CCs in a CC list to which the CC belongs.

Optionally, the TCI state pool is associated with at least one piece of transmission-reception point identification information.

Optionally, in a case that the TCI state pool is associated with at least two pieces of transmission-reception point identification information, the TCI state pool satisfies at least one of the following:
a TCI state corresponds to one piece of transmission-reception point identification information;
a TCI state includes a source RS corresponding to the at least two pieces of transmission-reception point identification information; and
each TCI state group includes TCI states corresponding to the at least two pieces of transmission-reception point identification information.

Optionally, all objects in the object group correspond to same transmission-reception point identification information.

Optionally, the object group is determined by at least one of the following: a control resource set, a link direction, and a channel type.

Optionally, the N object groups include a first object group, and the first object group satisfies any one of the following:
the first object group includes a control channel carried by a first control resource set, and the control channel carried by the first control resource set includes a group common control channel;
the first object group includes a control channel carried by a second control resource set, and the control channel carried by the second control resource set includes only a dedicated control channel; and
the first object group includes a target control channel and a target object, the target control channel is a control channel carried by at least one third control resource set, and the target object includes at least one of a channel scheduled by the target control channel, a reference signal scheduled by the target control channel, and a feedback channel corresponding to the target control channel.

Optionally, the indication information includes a fourth TCI state, the fourth TCI state is used for determining beam information of the first object group, and the fourth TCI state is carried in a target control resource set or a MAC CE command.

Optionally, the target control resource set satisfies at least one of the following:
a control channel carried by the target control resource set belongs to a second object group, beam information corresponding to the target control resource set is indicated by the indication information, and the second object group is any object group in the N object groups other than the first object group; and
a control channel carried by the target control resource set does not belong to the N object groups, and beam information corresponding to the target control resource set is indicated by a MAC CE command.

Optionally, objects in the object group include at least one of the following:
CSI-RS for obtaining channel state information CSI;
CSI-RS for tracking;
sounding reference signal SRS for antenna switching;
SRS for codebook;
SRS for non-codebook; and
RS for beam failure detection.

Optionally, in a case that objects in the object group include the RS for beam failure detection, the object group further includes a control channel.

Optionally, the beam information satisfies at least one of the following:
the beam information is used only for a first object in a corresponding object group; and
the beam information is used for all objects in a corresponding object group; where
no TCI state or quasi-co-located QCL information is configured for the first object.

Optionally, the indication information is carried in a first medium access control control element MAC CE or downlink control information DCI.

Optionally, before the step of sending first information, the method further includes:
sending a second MAC CE, where the second MAC CE is used to activate M TCI states; where
M is a positive integer, and in a case that M is greater than 1, the indication information is carried in the DCI, and the indication information is used to indicate one TCI state in the M TCI states.

Optionally, the method further includes:
determining that a TCI state of a second object is one TCI state in the M TCI states; where
the second object is a CSI-RS for obtaining channel state information CSI or a CSI-RS for tracking.

Optionally, the method further includes:
sending enabling information, where the enabling information is used to indicate whether the first MAC CE is used to carry the indication information.

Optionally, first-type QCL information included in the TCI state is used for at least one of a downlink channel and a downlink RS of the target group, and second-type QCL information included in the TCI state is used for at least one of a downlink channel, an uplink channel, a downlink RS, and an uplink RS of the object group, where the first-type QCL information is at least one of time domain parameter information and frequency domain parameter information, and the second-type QCL information is space domain parameter information.

It should be noted that this embodiment is used as an implementation of the network device corresponding to the embodiment shown in FIG. 2. For a specific implementation of this embodiment, reference may be made to the related descriptions of the embodiment shown in FIG. 2, and a same beneficial effect is achieved. To avoid repetition, details are not described herein again.

It should be noted that, for the beam processing method provided in the embodiments of this application, the execution body may be a beam processing apparatus, or a control module for executing the beam processing method in the beam processing apparatus. In the embodiments of this application, the beam processing apparatus provided by the embodiments of this application is described by using the beam processing method being executed by the beam processing apparatus as an example.

Referring to FIG. 4, FIG. 4 is a structural diagram of a beam processing apparatus according to an embodiment of this application. As shown in FIG. 4, the beam processing apparatus 400 includes:
a receiving module 401, configured to receive first configuration information, where the first configuration information is used to indicate a candidate beam information set, the candidate beam information set includes candidate beam information sets of N object groups, at least one of the object groups includes at least two objects, each of the objects is a channel or a reference signal, and N is a positive integer; where
the receiving module 401 is further configured to receive indication information, where the indication information is used to indicate beam information of the object group, and the beam information belongs to the candidate beam information set of the object group.

Optionally, the first configuration information is carried in target configuration information, and the target configuration information is other configuration information than physical downlink shared channel PDSCH configuration information.

Optionally, the target configuration information includes at least one of the following: configuration information of a bandwidth part BWP, configuration information of a cell, configuration information of a cell group, configuration information of a component carrier CC list, configuration information of an uplink CC list, and configuration information of a downlink CC list.

Optionally, the N object groups satisfy any one of the following:
the N object groups include one object group, and the object group includes an uplink object and a downlink object;
the N object groups include at least two object groups, and at least one of the object groups includes an uplink object and a downlink object;
the N object groups include two object groups, one object group includes an uplink object, and the other object group includes a downlink object;
the N object groups include N1 object groups and N2 object groups, each of the N1 object groups includes an uplink object, and each of the N2 object groups includes a downlink object, where N1 and N2 are both positive integers, a sum of N1 and N2 is N, and N is greater than 2;
each of the N object groups includes only an uplink object; and
each of the N object groups includes only a downlink object.

Optionally, the first configuration information is configuration information of a transmission configuration indicator state TCI state pool.

Optionally, the TCI state pool includes at least one of the following:
TCI states; and
at least one TCI state group, where the TCI state group includes at least two TCI states; where
each TCI state in the TCI state pool includes at least one source reference signal RS.

Optionally, at least one TCI state group includes at least one of the following:
a first TCI state group, where the first TCI state group includes at least two TCI states only for uplink;
a second TCI state group, where the second TCI state group includes at least two TCI states only for downlink;
a third TCI state group, where the third TCI state group includes at least one TCI state for uplink and at least one TCI state for downlink; and
a fourth TCI state group, where the fourth TCI state group includes at least two TCI states for uplink and downlink.

Optionally, in a case that the TCI state pool includes TCI states for uplink, at least one TCI state for uplink includes a target parameter or is associated with a target parameter; where
the target parameter includes at least one of the following: physical uplink shared channel port information, precoding information, power control parameter information, and uplink timing information.

Optionally, the beam processing apparatus 400 further includes:
a first determining module, configured to determine the target parameter based on a TCI state indicated by the indication information.

Optionally, a TCI state indicated by the indication information includes:
a first source RS, used for determining that the TCI state is at least one of an uplink TCI state and a downlink TCI state, and the first source RS is used to indicate beam information; and
a second source RS, used for determining that the TCI state is a downlink TCI state, and the second source RS is used to indicate at least one of a time domain parameter and a frequency domain parameter.

Optionally, the indication information is used to indicate at least one TCI state, and the at least one TCI state is used for determining beam information of the N object groups.

Optionally, the indication information is further used to indicate type information of a first TCI state, the first TCI state belongs to the at least one TCI state, and a source RS included in the first TCI state corresponds to a plurality of types or has no corresponding type.

Optionally, the beam information is in one-to-one correspondence to the object groups.

Optionally, the at least one TCI state includes at least one of the following:
N3 second TCI states, where each of the second TCI states is used for determining one piece of beam information;
N4 third TCI states, where each of the third TCI states is used for determining N5 pieces of beam information; and
N6 TCI state groups, where each of the TCI state groups is used for determining N7 pieces of beam information; where
N3, N4, N6, and N7 are all positive integers, and N5 is an integer greater than 1.

Optionally, a TCI state indicated by the indication information satisfies any one of the following:
in a case that the indication information indicates one TCI state of a downlink CC, the TCI state is used for all CCs in a downlink CC list to which the downlink CC belongs;
in a case that the indication information indicates one TCI state of an uplink CC, the TCI state is used for all CCs in an uplink CC list to which the uplink CC belongs;
in a case that the indication information indicates one TCI state of a CC, the TCI state is used for all CCs in a CC list to which the CC belongs;
in a case that the indication information indicates at least two TCI states of a downlink CC, the at least two TCI states are used for different object groups on all CCs in a downlink CC list to which the downlink CC belongs;
in a case that the indication information indicates at least two TCI states of an uplink CC, the at least two TCI states are used for different object groups on all CCs in an uplink CC list to which the uplink CC belongs; and
in a case that the indication information indicates at least two TCI states of a CC, the at least two TCI states are used for different object groups on all CCs in a CC list to which the CC belongs.

Optionally, the TCI state pool is associated with at least one piece of transmission-reception point identification information.

Optionally, in a case that the TCI state pool is associated with at least two pieces of transmission-reception point identification information, the TCI state pool satisfies at least one of the following:
a TCI state corresponds to one piece of transmission-reception point identification information;
a TCI state includes a source RS corresponding to the at least two pieces of transmission-reception point identification information; and
each TCI state group includes TCI states corresponding to the at least two pieces of transmission-reception point identification information.

Optionally, all objects in the object group correspond to same transmission-reception point identification information.

Optionally, the object group is determined by at least one of the following: a control resource set, a link direction, and a channel type.

Optionally, the N object groups include a first object group, and the first object group satisfies any one of the following:
the first object group includes a control channel carried by a first control resource set, and the control channel carried by the first control resource set includes a group common control channel;
the first object group includes a control channel carried by a second control resource set, and the control channel carried by the second control resource set includes only a dedicated control channel; and
the first object group includes a target control channel and a target object, the target control channel is a control channel carried by at least one third control resource set, and the target object includes at least one of a channel scheduled by the target control channel, a reference signal scheduled by the target control channel, and a feedback channel corresponding to the target control channel.

Optionally, the indication information includes a fourth TCI state, the fourth TCI state is used for determining beam information of the first object group, and the fourth TCI state is carried in a target control resource set or a MAC CE command.

Optionally, the target control resource set satisfies at least one of the following:
a control channel carried by the target control resource set belongs to a second object group, beam information corresponding to the target control resource set is indicated by the indication information, and the second object group is any object group in the N object groups other than the first object group; and
a control channel carried by the target control resource set does not belong to the N object groups, and beam information corresponding to the target control resource set is indicated by a MAC CE command.

Optionally, objects in the object group include at least one of the following:
CSI-RS for obtaining channel state information CSI;
CSI-RS for tracking;
sounding reference signal SRS for antenna switching;
SRS for codebook;
SRS for non-codebook; and
RS for beam failure detection.

Optionally, in a case that objects in the object group include the RS for beam failure detection, the object group further includes a control channel.

Optionally, the beam information satisfies at least one of the following:
the beam information is used only for a first object in a corresponding object group; and
the beam information is used for all objects in a corresponding object group; where
no TCI state or quasi-co-located QCL information is configured for the first object.

Optionally, the indication information is carried in a first medium access control control element MAC CE or downlink control information DCI.

Optionally, the receiving module 401 is further configured to: receive a second MAC CE, where the second MAC CE is used to activate M TCI states; where
M is a positive integer, and in a case that M is greater than 1, the indication information is carried in the DCI, and the indication information is used to indicate one TCI state in the M TCI states.

Optionally, the beam processing apparatus 400 further includes:
a second determining module, configured to determine that a TCI state of a second object is one TCI state in the M TCI states; where
the second object is a CSI-RS for obtaining channel state information CSI or a CSI-RS for tracking.

Optionally, the receiving module 401 is further configured to receive enabling information, where the enabling information is used to indicate whether the first MAC CE is used to carry the indication information.

Optionally, first-type QCL information included in the TCI state is used for at least one of a downlink channel and a downlink RS of the target group, and second-type QCL information included in the TCI state is used for at least one of a downlink channel, an uplink channel, a downlink RS, and an uplink RS of the object group, where the first-type QCL information is at least one of time domain parameter information and frequency domain parameter information, and the second-type QCL information is space domain parameter information.

The beam processing apparatus 400 provided in this embodiment of this application is capable of implementing processes that are implemented by the terminal in the method embodiment of FIG. 2. To avoid repetition, details are not described herein again.

Referring to FIG. 5, FIG. 5 is a structural diagram of a beam processing apparatus according to an embodiment of this application. As shown in FIG. 5, the beam processing apparatus 500 includes:
a sending module 501, configured to send first configuration information, where the first configuration information is used to indicate a candidate beam information set, the candidate beam information set includes candidate beam information sets of N object groups, at least one of the object groups includes at least two objects, each of the objects is a channel or a reference signal, and N is a positive integer; where
the sending module 501 is further configured to send indication information, where the indication information is used to indicate beam information of the object group, and the beam information belongs to the candidate beam information set of the object group.

Optionally, the first configuration information is carried in target configuration information, and the target configuration information is other configuration information than physical downlink shared channel PDSCH configuration information.

Optionally, the target configuration information includes at least one of the following: configuration information of a bandwidth part BWP, configuration information of a cell, configuration information of a cell group, configuration information of a component carrier CC list, configuration information of an uplink CC list, and configuration information of a downlink CC list.

Optionally, the N object groups satisfy any one of the following:
the N object groups include one object group, and the object group includes an uplink object and a downlink object;
the N object groups include at least two object groups, and at least one of the object groups includes an uplink object and a downlink object;
the N object groups include two object groups, one object group includes an uplink object, and the other object group includes a downlink object;
the N object groups include N1 object groups and N2 object groups, each of the N1 object groups includes an uplink object, and each of the N2 object groups includes a downlink object, where N1 and N2 are both positive integers, a sum of N1 and N2 is N, and N is greater than 2;
each of the N object groups includes only an uplink object; and
each of the N object groups includes only a downlink object.

Optionally, the first configuration information is configuration information of a transmission configuration indicator state TCI state pool.

Optionally, the TCI state pool includes at least one of the following:
TCI states; and
at least one TCI state group, where the TCI state group includes at least two TCI states; where
each TCI state in the TCI state pool includes at least one source reference signal RS.

Optionally, at least one TCI state group includes at least one of the following:
a first TCI state group, where the first TCI state group includes at least two TCI states only for uplink;
a second TCI state group, where the second TCI state group includes at least two TCI states only for downlink;
a third TCI state group, where the third TCI state group includes at least one TCI state for uplink and at least one TCI state for downlink; and
a fourth TCI state group, where the fourth TCI state group includes at least two TCI states for uplink and downlink.

Optionally, in a case that the TCI state pool includes TCI states for uplink, at least one TCI state for uplink includes a target parameter or is associated with a target parameter; where
the target parameter includes at least one of the following: physical uplink shared channel port information, precoding information, power control parameter information, and uplink timing information.

Optionally, the beam processing apparatus 500 includes:
a third determining module, configured to determine the target parameter based on a TCI state indicated by the indication information.

Optionally, a TCI state indicated by the indication information includes:
a first source RS, used for determining that the TCI state is at least one of an uplink TCI state and a downlink TCI state, and the first source RS is used to indicate beam information; and
a second source RS, used for determining that the TCI state is a downlink TCI state, and the second source RS is used to indicate at least one of a time domain parameter and a frequency domain parameter.

Optionally, the indication information is used to indicate at least one TCI state, and the at least one TCI state is used for determining beam information of the N object groups.

Optionally, the indication information is further used to indicate type information of a first TCI state, the first TCI state belongs to the at least one TCI state, and a source RS included in the first TCI state corresponds to a plurality of types or has no corresponding type.

Optionally, the beam information is in one-to-one correspondence to the object groups.

Optionally, the at least one TCI state includes at least one of the following:
N3 second TCI states, where each of the second TCI states is used for determining one piece of beam information;
N4 third TCI states, where each of the third TCI states is used for determining N5 pieces of beam information; and
N6 TCI state groups, where each of the TCI state groups is used for determining N7 pieces of beam information; where
N3, N4, N6, and N7 are all positive integers, and N5 is an integer greater than 1.

Optionally, a TCI state indicated by the indication information satisfies any one of the following:
in a case that the indication information indicates one TCI state of a downlink CC, the TCI state is used for all CCs in a downlink CC list to which the downlink CC belongs;
in a case that the indication information indicates one TCI state of an uplink CC, the TCI state is used for all CCs in an uplink CC list to which the uplink CC belongs;
in a case that the indication information indicates one TCI state of a CC, the TCI state is used for all CCs in a CC list to which the CC belongs;
in a case that the indication information indicates at least two TCI states of a downlink CC, the at least two TCI states are used for different object groups on all CCs in a downlink CC list to which the downlink CC belongs;
in a case that the indication information indicates at least two TCI states of an uplink CC, the at least two TCI states are used for different object groups on all CCs in an uplink CC list to which the uplink CC belongs; and
in a case that the indication information indicates at least two TCI states of a CC, the at least two TCI states are used for different object groups on all CCs in a CC list to which the CC belongs.

Optionally, the TCI state pool is associated with at least one piece of transmission-reception point identification information.

Optionally, in a case that the TCI state pool is associated with at least two pieces of transmission-reception point identification information, the TCI state pool satisfies at least one of the following:
a TCI state corresponds to one piece of transmission-reception point identification information;
a TCI state includes a source RS corresponding to the at least two pieces of transmission-reception point identification information; and
each TCI state group includes TCI states corresponding to the at least two pieces of transmission-reception point identification information.

Optionally, all objects in the object group correspond to same transmission-reception point identification information.

Optionally, the object group is determined by at least one of the following: a control resource set, a link direction, and a channel type.

Optionally, the N object groups include a first object group, and the first object group satisfies any one of the following:
the first object group includes a control channel carried by a first control resource set, and the control channel carried by the first control resource set includes a group common control channel;
the first object group includes a control channel carried by a second control resource set, and the control channel carried by the second control resource set includes only a dedicated control channel; and
the first object group includes a target control channel and a target object, the target control channel is a control channel carried by at least one third control resource set, and the target object includes at least one of a channel scheduled by the target control channel, a reference signal scheduled by the target control channel, and a feedback channel corresponding to the target control channel.

Optionally, the indication information includes a fourth TCI state, the fourth TCI state is used for determining beam information of the first object group, and the fourth TCI state is carried in a target control resource set or a MAC CE command.

Optionally, the target control resource set satisfies at least one of the following:
a control channel carried by the target control resource set belongs to a second object group, beam information corresponding to the target control resource set is indicated by the indication information, and the second object group is any object group in the N object groups other than the first object group; and
a control channel carried by the target control resource set does not belong to the N object groups, and beam information corresponding to the target control resource set is indicated by a MAC CE command.

Optionally, objects in the object group include at least one of the following:
CSI-RS for obtaining channel state information CSI;
CSI-RS for tracking;
sounding reference signal SRS for antenna switching;
SRS for codebook;
SRS for non-codebook; and
RS for beam failure detection.

Optionally, in a case that objects in the object group include the RS for beam failure detection, the object group further includes a control channel.

Optionally, the beam information satisfies at least one of the following:
the beam information is used only for a first object in a corresponding object group; and
the beam information is used for all objects in a corresponding object group; where
no TCI state or quasi-co-located QCL information is configured for the first object.

Optionally, the indication information is carried in a first medium access control control element MAC CE or downlink control information DCI.

Optionally, the sending module 501 is further configured to: send a second MAC CE, where the second MAC CE is used to activate M TCI states; where
M is a positive integer, and in a case that M is greater than 1, the indication information is carried in the DCI, and the indication information is used to indicate one TCI state in the M TCI states.

Optionally, the beam processing apparatus 500 includes:
a third determining module, configured to determine that a TCI state of a second object is one TCI state in the M TCI states; where
the second object is a CSI-RS for obtaining channel state information CSI or a CSI-RS for tracking.

Optionally, the sending module 501 is further configured to send enabling information, where the enabling information is used to indicate whether the first MAC CE is used to carry the indication information.

Optionally, first-type QCL information included in the TCI state is used for at least one of a downlink channel and a downlink RS of the target group, and second-type QCL information included in the TCI state is used for at least one of a downlink channel, an uplink channel, a downlink RS, and an uplink RS of the object group, where the first-type QCL information is at least one of time domain parameter information and frequency domain parameter information, and the second-type QCL information is space domain parameter information.

The beam processing apparatus 500 provided in this embodiment of this application is capable of implementing processes that are implemented by the network device in the method embodiment of FIG. 3. To avoid repetition, details are not described herein again.

The beam processing apparatus in this embodiment of this application may be an apparatus, or may be a component, an integrated circuit, or a chip in the terminal. The apparatus may be a mobile terminal or a non-mobile terminal. For example, the mobile terminal may include but is not limited to the types of the terminal 11 listed above, and the non-mobile terminal may be a server, a network attached storage (Network Attached Storage, NAS), a personal computer (personal computer, PC), a television (television, TV), a teller machine, a self-service machine, or the like, which is not specifically limited in this embodiment of this application.

The beam processing apparatus in this embodiment of this application may be an apparatus with an operating system. The operating system may be an Android (Android) operating system, an iOS operating system, or other possible operating systems, and is not specifically limited in the embodiments of this application.

The beam processing apparatus provided in this embodiment of this application is capable of implementing the processes implemented in the method embodiments in FIG. 2 and FIG. 3, with the same technical effects achieved. To avoid repetition, details are not described herein again.

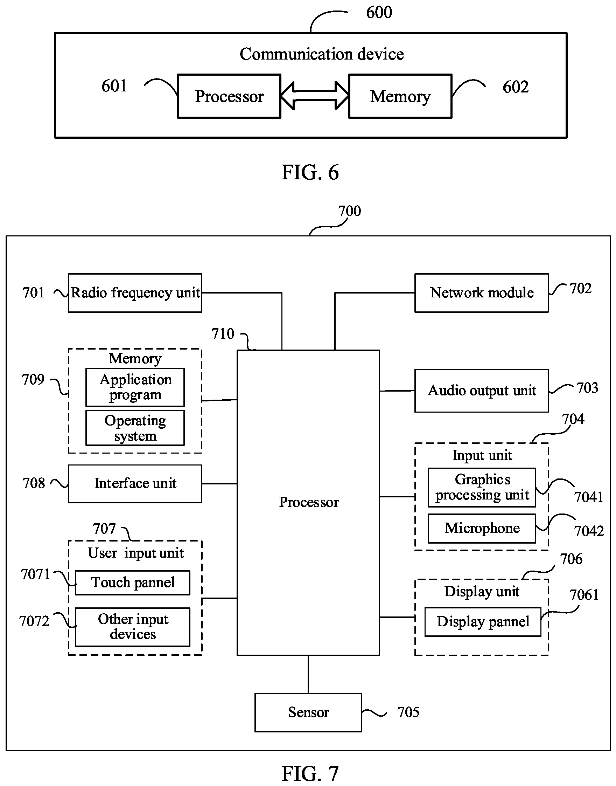

Optionally, as shown in FIG. 6, an embodiment of this application further provides a communication device 600, including a processor 601, a memory 602, and a program or instructions stored in the memory 602 and capable of running on the processor 601. When the program or the instructions are executed by the processor 601, the processes of the foregoing embodiment of the beam processing method are implemented, with the same technical effects achieved. To avoid repetition, details are not described herein again.

FIG. 7 is a schematic diagram of a hardware structure of a terminal for implementing the embodiments of this application.

The terminal 700 includes but is not limited to components such as a radio frequency unit 701, a network module 702, an audio output unit 703, an input unit 704, a sensor 705, a display unit 706, a user input unit 707, an interface unit 708, a memory 709, and a processor 710.

Persons skilled in the art can understand that the terminal 700 may further include a power supply (for example, a battery) supplying power to the components, and the power supply may be logically connected to the processor 710 through a power management system. In this way, functions such as charge management, discharge management, and power consumption management are implemented by using the power management system. The structure of the terminal shown in FIG. 7 does not constitute any limitation on the terminal. The terminal may include more or fewer components than shown in the figure, or a combination of some components, or the components disposed differently. Details are not described herein again.

It can be understood that in this embodiment of this application, the input unit 704 may include a graphics processing unit (Graphics Processing Unit, GPU) 7041 and a microphone 7042. The graphics processing unit 7041 processes image data of a still picture or video obtained by an image capture apparatus (such as a camera) in a video capture mode or an image capture mode. The display unit 706 may include a display panel 7061, and the display panel 7061 may be configured in a form of a liquid crystal display, an organic light-emitting diode, and the like. The user input unit 707 may include a touch panel 7071 and other input devices 7072. The touch panel 7071 is also referred to as a touchscreen. The touch panel 7071 may include two parts: a touch detection apparatus and a touch controller. The other input devices 7072 may include but are not limited to a physical keyboard, a function key (such as a volume control key or a power on/off key), a trackball, a mouse, a joystick, and the like. Details are not described herein.

In this embodiment of this application, the radio frequency unit 701 receives downlink data from a network-side device, and then sends the downlink data to the processor 710 for processing; and also sends uplink data to the network-side device. Generally, the radio frequency unit 701 includes but is not limited to an antenna, at least one amplifier, a transceiver, a coupler, a low noise amplifier, a duplexer, and the like.

The memory 709 may be configured to store software programs or instructions and various data. The memory 709 may include a program or instruction storage area and a data storage area. The program or instruction storage area may store an operating system, an application program or instructions required by at least one function (for example, a sound playback function or an image playback function), and the like. In addition, the memory 709 may include a high-speed random access memory, and may further include a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory, for example, at least one disk storage device, a flash memory device, or another volatile solid-state storage device.

The processor 710 may include one or more processing units. Optionally, an application processor and a modem processor may be integrated in the processor 710. The application processor primarily processes an operating system, user interfaces, application programs or instructions, and the like. The modem processor primarily processes radio communication, for example, being a baseband processor. It can be understood that the modem processor may alternatively be not integrated in the processor 710.

The radio frequency unit 701 is configured to:
receive first configuration information, where the first configuration information is used to indicate a candidate beam information set, the candidate beam information set includes candidate beam information sets of N object groups, at least one of the object groups includes at least two objects, each of the objects is a channel or a reference signal, and N is a positive integer; and
receive indication information, where the indication information is used to indicate beam information of the object group, and the beam information belongs to the candidate beam information set of the object group.

It should be understood that in this embodiment, the processor 710 and the radio frequency unit 701 is capable of implementing the processes implemented by the terminal in the method embodiment in FIG. 2. To avoid repetition, details are not described herein again.

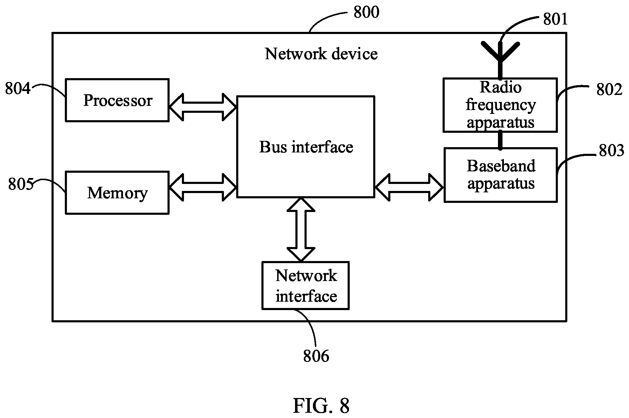

Specifically, an embodiment of this application further provides a network-side device. As shown in FIG. 8, the network device 800 includes an antenna 801, a radio frequency apparatus 802, and a baseband apparatus 803. The antenna 801 is connected to the radio frequency apparatus 802. In an uplink direction, the radio frequency apparatus 802 receives information by using the antenna 801, and sends the received information to the baseband apparatus 803 for processing. In a downlink direction, the baseband apparatus 803 processes to-be-sent information, and sends the information to the radio frequency apparatus 802; and the radio frequency apparatus 802 processes the received information and then sends the information out by using the antenna 801.

The frequency band processing apparatus may be located in the baseband apparatus 803. The method performed by the network-side device in the foregoing embodiments may be implemented in the baseband apparatus 803, and the baseband apparatus 803 includes a processor 804 and a memory 805.

The baseband apparatus 803 may include, for example, at least one baseband processing unit, where a plurality of chips are disposed on the baseband processing unit. As shown in FIG. 8, one of the chips is, for example, the processor 804, connected to the memory 805, to invoke a program in the memory 805 to perform the operation of the network device shown in the foregoing method embodiment.

The baseband apparatus 803 may further include a network interface 806, configured to exchange information with the radio frequency apparatus 802, where the interface is, for example, a common public radio interface (common public radio interface, CPRI).

Specifically, the network-side device in this embodiment of this application further includes: instructions or a program stored in the memory 805 and capable of running on the processor 804. The processor 804 invokes the instructions or program in the memory 805 to execute the method executed by the modules shown in FIG. 6, with the same technical effects achieved. To avoid repetition, details are not described herein again.

An embodiment of the present invention further provides a readable storage medium, where a program or instructions are stored in the readable storage medium. When the program or instructions are executed by a processor, the processes of the foregoing beam processing method embodiment can be implemented, with same technical effects achieved. To avoid repetition, details are not described herein again.

The processor is a processor in the electronic device described in the foregoing embodiments. The readable storage medium includes a computer-readable storage medium, for example, a computer read-only memory (Read-Only Memory, ROM), a random access memory (Random Access Memory, RAM), a magnetic disk, or an optical disc.

An embodiment of this application further provides a chip, where the chip includes a processor and a communications interface. The communications interface is coupled to the processor, and the processor is configured to run a program or instructions of a network device to implement the processes of the foregoing beam processing method embodiments, with the same technical effects achieved. To avoid repetition, details are not described herein again.

It should be understood that the chip mentioned in the embodiments of this application may also be referred to as a system-level chip, a system chip, a chip system, a system-on-chip, or the like.

An embodiment of this application provides a computer program product, where the computer program product is stored in a non-volatile storage medium, and when being executed by at least one processor, the computer program product is configured to implement the processes of the foregoing beam processing method embodiments, with the same technical effects achieved. To avoid repetition, details are not repeated herein.

It may be understood that the embodiments described in this disclosure may be implemented by hardware, software, firmware, middleware, microcode, or a combination thereof. For hardware implementation, a module, a unit, a submodule, a subunit, and the like may be implemented in one or more application specific integrated circuits (Application Specific Integrated Circuit, ASIC), digital signal processors (Digital Signal Processor, DSP), digital signal processing devices (DSP Device, DSPD), programmable logic devices (Programmable Logic Device, PLD), field-programmable gate arrays (Field-Programmable Gate Array, FPGA), general-purpose processors, controllers, microcontrollers, microprocessors, and other electronic units for performing the functions described in this application, or a combination thereof.

It should be noted that the terms "include", "comprise", or any of their variants are intended to cover a non-exclusive inclusion, such that a process, a method, an article, or an apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. In addition, it should be noted that the scope of the method and the apparatus in the embodiments of this application is not limited to executing the functions in an order shown or discussed, but may also include executing the functions in a substantially simultaneous manner or in a reverse order, depending on the functions involved. For example, the described methods may be performed in an order different from that described, and steps may alternatively be added, omitted, or combined. In addition, features described with reference to some examples may be combined in other examples.

According to the foregoing description of the implementations, persons skilled in the art may clearly understand that the methods in the foregoing embodiments may be implemented by using software in combination with a necessary common hardware platform, and certainly may alternatively be implemented by using hardware. However, in most cases, the former is a preferred implementation. Based on such an understanding, the technical solutions of this application essentially or the part contributing to the prior art may be implemented in a form of a software product. The software product is stored in a storage medium (such as a ROM/RAM, a magnetic disk, or an optical disc), and includes several instructions for instructing a terminal (which may be a mobile phone, a computer, a server, an air conditioner, a base station, or the like) to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other manners without departing from principles of this application and the protection scope of the claims, and all such manners fall within the protection scope of this application.

## Claims

1. A beam processing method, executed by a terminal and comprising:
receiving first configuration information, wherein the first configuration information is used to indicate a candidate beam information set, the candidate beam information set comprises candidate beam information sets of N object groups, at least one of the object groups comprises at least two objects, each of the objects is a channel or a reference signal, and N is a positive integer; and
receiving indication information, wherein the indication information is used to indicate beam information of the object group, and the beam information belongs to the candidate beam information set of the object group.

2. The method according to claim 1, wherein the first configuration information is carried in target configuration information, and the target configuration information is other configuration information than physical downlink shared channel PDSCH configuration information.

3. The method according to claim 2, wherein the target configuration information comprises at least one of the following: configuration information of a bandwidth part BWP, configuration information of a cell, configuration information of a cell group, configuration information of a component carrier CC list, configuration information of an uplink CC list, and configuration information of a downlink CC list.

4. The method according to claim 1, wherein the N object groups satisfy any one of the following:
the N object groups comprise one object group, and the object group comprises an uplink object and a downlink object;
the N object groups comprise at least two object groups, and at least one of the object groups comprises an uplink object and a downlink object;
the N object groups comprise two object groups, one object group comprises an uplink object, and the other object group comprises a downlink object;
the N object groups comprise N1 object groups and N2 object groups, each of the N1 object groups comprises an uplink object, and each of the N2 object groups comprises a downlink object, wherein N1 and N2 are both positive integers, a sum of N1 and N2 is N, and N is greater than 2;
each of the N object groups comprises only an uplink object; and
each of the N object groups comprises only a downlink object.

5. The method according to claim 4, wherein the first configuration information is configuration information of a transmission configuration indicator state TCI state pool.

6. The method according to claim 5, wherein the TCI state pool comprises at least one of the following:
TCI states; and
at least one TCI state group, wherein the TCI state group comprises at least two TCI states; wherein
each TCI state in the TCI state pool comprises at least one source reference signal RS.

7. The method according to claim 6, wherein at least one TCI state group comprises at least one of the following:
a first TCI state group, wherein the first TCI state group comprises at least two TCI states only for uplink;
a second TCI state group, wherein the second TCI state group comprises at least two TCI states only for downlink;
a third TCI state group, wherein the third TCI state group comprises at least one TCI state for uplink and at least one TCI state for downlink; and
a fourth TCI state group, wherein the fourth TCI state group comprises at least two TCI states for uplink and downlink.

8. The method according to claim 5, wherein, in a case that the TCI state pool comprises TCI states for uplink, at least one TCI state for uplink comprises a target parameter or is associated with a target parameter; wherein
the target parameter comprises at least one of the following: physical uplink shared channel port information, precoding information, power control parameter information, and uplink timing information.

9. The method according to claim 8, further comprising:
determining the target parameter based on a TCI state indicated by the indication information.

10. The method according to claim 5, wherein a TCI state indicated by the indication information comprises:
a first source RS, used for determining that the TCI state is at least one of an uplink TCI state and a downlink TCI state, and the first source RS is used to indicate beam information; and
a second source RS, used for determining that the TCI state is a downlink TCI state, and the second source RS is used to indicate at least one of a time domain parameter and a frequency domain parameter.

11. The method according to claim 4, wherein the indication information is used to indicate at least one TCI state, and the at least one TCI state is used for determining beam information of the N object groups.

12. The method according to claim 11, wherein the indication information is further used to indicate type information of a first TCI state, the first TCI state belongs to the at least one TCI state, and a source RS comprised in the first TCI state corresponds to a plurality of types or has no corresponding type.

13. The method according to claim 11, wherein the beam information is in one-to-one correspondence to the object groups.

14. The method according to claim 11, wherein the at least one TCI state comprises at least one of the following:
N3 second TCI states, wherein each of the second TCI states is used for determining one piece of beam information;
N4 third TCI states, wherein each of the third TCI states is used for determining N5 pieces of beam information; and
N6 TCI state groups, wherein each of the TCI state groups is used for determining N7 pieces of beam information; wherein
N3, N4, N6, and N7 are all positive integers, and N5 is an integer greater than 1.

15. The method according to claim 11, wherein a TCI state indicated by the indication information satisfies any one of the following:
in a case that the indication information indicates one TCI state of a downlink CC, the TCI state is used for all CCs in a downlink CC list to which the downlink CC belongs;
in a case that the indication information indicates one TCI state of an uplink CC, the TCI state is used for all CCs in an uplink CC list to which the uplink CC belongs;
in a case that the indication information indicates one TCI state of a CC, the TCI state is used for all CCs in a CC list to which the CC belongs;
in a case that the indication information indicates at least two TCI states of a downlink CC, the at least two TCI states are used for different object groups on all CCs in a downlink CC list to which the downlink CC belongs;
in a case that the indication information indicates at least two TCI states of an uplink CC, the at least two TCI states are used for different object groups on all CCs in an uplink CC list to which the uplink CC belongs; and
in a case that the indication information indicates at least two TCI states of a CC, the at least two TCI states are used for different object groups on all CCs in a CC list to which the CC belongs.

16. The method according to claim 5, wherein the TCI state pool is associated with at least one piece of transmission-reception point identification information.

17. The method according to claim 16, wherein in a case that the TCI state pool is associated with at least two pieces of transmission-reception point identification information, the TCI state pool satisfies at least one of the following:
a TCI state corresponds to one piece of transmission-reception point identification information;
a TCI state comprises a source RS corresponding to the at least two pieces of transmission-reception point identification information; and
each TCI state group comprises TCI states corresponding to the at least two pieces of transmission-reception point identification information.

18. The method according to claim 17, wherein all objects in the object group correspond to same transmission-reception point identification information.

19. The method according to claim 1, wherein the object group is determined by at least one of the following: a control resource set, a link direction, and a channel type.

20. The method according to claim 1, wherein the N object groups comprise a first object group, and the first object group satisfies any one of the following:
the first object group comprises a control channel carried by a first control resource set, and the control channel carried by the first control resource set comprises a group common control channel;
the first object group comprises a control channel carried by a second control resource set, and the control channel carried by the second control resource set comprises only a dedicated control channel; and
the first object group comprises a target control channel and a target object, the target control channel is a control channel carried by at least one third control resource set, and the target object comprises at least one of a channel scheduled by the target control channel, a reference signal scheduled by the target control channel, and a feedback channel corresponding to the target control channel.

21. The method according to claim 20, wherein the indication information comprises a fourth TCI state, the fourth TCI state is used for determining beam information of the first object group, and the fourth TCI state is carried in a target control resource set or a MAC CE command.

22. The method according to claim 21, wherein the target control resource set satisfies at least one of the following:
a control channel carried by the target control resource set belongs to a second object group, beam information corresponding to the target control resource set is indicated by the indication information, and the second object group is any object group in the N object groups other than the first object group; and
a control channel carried by the target control resource set does not belong to the N object groups, and beam information corresponding to the target control resource set is indicated by a MAC CE command.

23. The method according to claim 1, wherein objects in the object group comprise at least one of the following:
CSI-RS for obtaining channel state information CSI;
CSI-RS for tracking;
sounding reference signal SRS for antenna switching;
SRS for codebook;
SRS for non-codebook; and
RS for beam failure detection.

24. The method according to claim 23, wherein in a case that objects in the object group comprise the RS for beam failure detection, the object group further comprises a control channel.

25. The method according to claim 1, wherein the beam information satisfies at least one of the following:
the beam information is used only for a first object in a corresponding object group; and
the beam information is used for all objects in a corresponding object group; wherein
no TCI state or quasi-co-located QCL information is configured for the first object.

26. The method according to claim 1, wherein the indication information is carried in a first medium access control control element MAC CE or downlink control information DCI.

27. The method according to claim 26, wherein before the step of receiving indication information, the method further comprises:
receiving a second MAC CE, wherein the second MAC CE is used to activate M TCI states; wherein
M is a positive integer, and in a case that M is greater than 1, the indication information is carried in the DCI, and the indication information is used to indicate one TCI state in the M TCI states.

28. The method according to claim 27, further comprising:
determining that a TCI state of a second object is one TCI state in the M TCI states; wherein
the second object is a CSI-RS for obtaining channel state information CSI or a CSI-RS for tracking.

29. The method according to claim 26, further comprising:
receiving enabling information, wherein the enabling information is used to indicate whether the first MAC CE is used to carry the indication information.

30. The method according to claim 11, wherein first-type QCL information comprised in the TCI state is used for at least one of a downlink channel and a downlink RS of the target group, and second-type QCL information comprised in the TCI state is used for at least one of a downlink channel, an uplink channel, a downlink RS, and an uplink RS of the object group, wherein the first-type QCL information is at least one of time domain parameter information and frequency domain parameter information, and the second-type QCL information is space domain parameter information.

31. A beam processing method, executed by a network device and comprising:
sending first configuration information, wherein the first configuration information is used to indicate a candidate beam information set, the candidate beam information set comprises candidate beam information sets of N object groups, at least one of the object groups comprises at least two objects, each of the objects is a channel or a reference signal, and N is a positive integer; and
sending indication information, wherein the indication information is used to indicate beam information of the object group, and the beam information belongs to the candidate beam information set of the object group.

32. The method according to claim 31, wherein the first configuration information is carried in target configuration information, and the target configuration information is other configuration information than physical downlink shared channel PDSCH configuration information.

33. The method according to claim 32, wherein the target configuration information comprises at least one of the following: configuration information of a bandwidth part BWP, configuration information of a cell, configuration information of a cell group, configuration information of a component carrier CC list, configuration information of an uplink CC list, and configuration information of a downlink CC list.

34. The method according to claim 31, wherein the N object groups satisfy any one of the following:
the N object groups comprise one object group, and the object group comprises an uplink object and a downlink object;
the N object groups comprise at least two object groups, and at least one of the object groups comprises an uplink object and a downlink object;
the N object groups comprise two object groups, one object group comprises an uplink object, and the other object group comprises a downlink object;
the N object groups comprise N1 object groups and N2 object groups, each of the N1 object groups comprises an uplink object, and each of the N2 object groups comprises a downlink object, wherein N1 and N2 are both positive integers, a sum of N1 and N2 is N, and N is greater than 2;
each of the N object groups comprises only an uplink object; and
each of the N object groups comprises only a downlink object.

35. The method according to claim 34, wherein the first configuration information is configuration information of a transmission configuration indicator state TCI state pool.

36. The method according to claim 35, wherein the TCI state pool comprises at least one of the following:
TCI states; and
at least one TCI state group, wherein the TCI state group comprises at least two TCI states; wherein
each TCI state in the TCI state pool comprises at least one source reference signal RS.

37. The method according to claim 36, wherein at least one TCI state group comprises at least one of the following:
a first TCI state group, wherein the first TCI state group comprises at least two TCI states only for uplink;
a second TCI state group, wherein the second TCI state group comprises at least two TCI states only for downlink;
a third TCI state group, wherein the third TCI state group comprises at least one TCI state for uplink and at least one TCI state for downlink; and
a fourth TCI state group, wherein the fourth TCI state group comprises at least two TCI states for uplink and downlink.

38. The method according to claim 35, wherein, in a case that the TCI state pool comprises TCI states for uplink, at least one TCI state for uplink comprises a target parameter or is associated with a target parameter; wherein
the target parameter comprises at least one of the following: physical uplink shared channel port information, precoding information, power control parameter information, and uplink timing information.

39. The method according to claim 38, further comprising:
determining the target parameter based on a TCI state indicated by the indication information.

40. The method according to claim 35, wherein a TCI state indicated by the indication information comprises:
a first source RS, used for determining that the TCI state is at least one of an uplink TCI state and a downlink TCI state, and the first source RS is used to indicate beam information; and
a second source RS, used for determining that the TCI state is a downlink TCI state, and the second source RS is used to indicate at least one of a time domain parameter and a frequency domain parameter.

41. The method according to claim 34, wherein the indication information is used to indicate at least one TCI state, and the at least one TCI state is used for determining beam information of the N object groups.

42. The method according to claim 41, wherein the indication information is further used to indicate type information of a first TCI state, the first TCI state belongs to the at least one TCI state, and a source RS comprised in the first TCI state corresponds to a plurality of types or has no corresponding type.

43. The method according to claim 41, wherein the beam information is in one-to-one correspondence to the object groups.

44. The method according to claim 41, wherein the at least one TCI state comprises at least one of the following:
N3 second TCI states, wherein each of the second TCI states is used for determining one piece of beam information;
N4 third TCI states, wherein each of the third TCI states is used for determining N5 pieces of beam information; and
N6 TCI state groups, wherein each of the TCI state groups is used for determining N7 pieces of beam information; wherein
N3, N4, N6, and N7 are all positive integers, and N5 is an integer greater than 1.

45. The method according to claim 41, wherein a TCI state indicated by the indication information comprises:
in a case that the indication information indicates one TCI state of a downlink CC, the TCI state is used for all CCs in a downlink CC list to which the downlink CC belongs;
in a case that the indication information indicates one TCI state of an uplink CC, the TCI state is used for all CCs in an uplink CC list to which the uplink CC belongs;
in a case that the indication information indicates one TCI state of a CC, the TCI state is used for all CCs in a CC list to which the CC belongs;
in a case that the indication information indicates at least two TCI states of a downlink CC, the at least two TCI states are used for different object groups on all CCs in a downlink CC list to which the downlink CC belongs;
in a case that the indication information indicates at least two TCI states of an uplink CC, the at least two TCI states are used for different object groups on all CCs in an uplink CC list to which the uplink CC belongs; and
in a case that the indication information indicates at least two TCI states of a CC, the at least two TCI states are used for different object groups on all CCs in a CC list to which the CC belongs.

46. The method according to claim 35, wherein the TCI state pool is associated with at least one piece of transmission-reception point identification information.

47. The method according to claim 46, wherein in a case that the TCI state pool is associated with at least two pieces of transmission-reception point identification information, the TCI state pool satisfies at least one of the following:
a TCI state corresponds to one piece of transmission-reception point identification information;
a TCI state comprises a source RS corresponding to the at least two pieces of transmission-reception point identification information; and
each TCI state group comprises TCI states corresponding to the at least two pieces of transmission-reception point identification information.

48. The method according to claim 47, wherein all objects in the object group correspond to same transmission-reception point identification information.

49. The method according to claim 31, wherein the object group is determined by at least one of the following: a control resource set, a link direction, and a channel type.

50. The method according to claim 31, wherein the N object groups comprise a first object group, and the first object group satisfies any one of the following:
the first object group comprises a control channel carried by a first control resource set, and the control channel carried by the first control resource set comprises a group common control channel;
the first object group comprises a control channel carried by a second control resource set, and the control channel carried by the second control resource set comprises only a dedicated control channel; and
the first object group comprises a target control channel and a target object, the target control channel is a control channel carried by at least one third control resource set, and the target object comprises at least one of a channel scheduled by the target control channel, a reference signal scheduled by the target control channel, and a feedback channel corresponding to the target control channel.

51. The method according to claim 50, wherein the indication information comprises a fourth TCI state, the fourth TCI state is used for determining beam information of the first object group, and the fourth TCI state is carried in a target control resource set or a MAC CE command.

52. The method according to claim 51, wherein the target control resource set satisfies at least one of the following:
a control channel carried by the target control resource set belongs to a second object group, beam information corresponding to the target control resource set is indicated by the indication information, and the second object group is any object group in the N object groups other than the first object group; and
a control channel carried by the target control resource set does not belong to the N object groups, and beam information corresponding to the target control resource set is indicated by a MAC CE command.

53. The method according to claim 31, wherein objects in the object group comprise at least one of the following:
CSI-RS for obtaining channel state information CSI;
CSI-RS for tracking;
sounding reference signal SRS for antenna switching;
SRS for codebook;
SRS for non-codebook; and
RS for beam failure detection.

54. The method according to claim 53, wherein in a case that objects in the object group comprise the RS for beam failure detection, the object group further comprises a control channel.

55. The method according to claim 31, wherein the beam information satisfies at least one of the following:
the beam information is used only for a first object in a corresponding object group; and
the beam information is used for all objects in a corresponding object group; wherein
no TCI state or quasi-co-located QCL information is configured for the first object.

56. The method according to claim 31, wherein the indication information is carried in a first medium access control control element MAC CE or downlink control information DCI.

57. The method according to claim 56, wherein before the step of sending indication information, the method further comprises:
sending a second MAC CE, wherein the second MAC CE is used to activate M TCI states; wherein
M is a positive integer, and in a case that M is greater than 1, the indication information is carried in the DCI, and the indication information is used to indicate one TCI state in the M TCI states.

58. The method according to claim 57, further comprising:
determining that a TCI state of a second object is one TCI state in the M TCI states; wherein
the second object is a CSI-RS for obtaining channel state information CSI or a CSI-RS for tracking.

59. The method according to claim 56, further comprising:
sending enabling information, wherein the enabling information is used to indicate whether the first MAC CE is used to carry the indication information.

60. The method according to claim 41, wherein first-type QCL information comprised in the TCI state is used for at least one of a downlink channel and a downlink RS of the target group, and second-type QCL information comprised in the TCI state is used for at least one of a downlink channel, an uplink channel, a downlink RS, and an uplink RS of the object group, wherein the first-type QCL information is at least one of time domain parameter information and frequency domain parameter information, and the second-type QCL information is space domain parameter information.

61. A beam processing apparatus, comprising:
a receiving module, configured to receive first configuration information, wherein the first configuration information is used to indicate a candidate beam information set, the candidate beam information set comprises candidate beam information sets of N object groups, at least one of the object groups comprises at least two objects, each of the objects is a channel or a reference signal, and N is a positive integer; wherein
the receiving module is further configured to receive indication information, wherein the indication information is used to indicate beam information of the object group, and the beam information belongs to the candidate beam information set of the object group.

62. A beam processing apparatus, comprising:
a sending module, configured to send first configuration information, wherein the first configuration information is used to indicate a candidate beam information set, the candidate beam information set comprises candidate beam information sets of N object groups, at least one of the object groups comprises at least two objects, each of the objects is a channel or a reference signal, and N is a positive integer; wherein
the sending module is further configured to send indication information, wherein the indication information is used to indicate beam information of the object group, and the beam information belongs to the candidate beam information set of the object group.

63. A communication device, comprising a memory, a processor, and a program or instructions stored in the memory and capable of running on the processor, wherein when the program or instructions are executed by the processor, the steps of the beam processing method according to any one of claims 1 to 60 are implemented.

64. A readable storage medium, wherein the readable storage medium stores a program or instructions, and when the program or the instructions are executed by a processor, the steps of the beam processing method according to any one of claims 1 to 60 are implemented.

65. A chip, wherein the chip comprises a processor and a communications interface, the communications interface is coupled to the processor, and the processor is configured to execute a program or instructions to implement the beam processing method according to any one of claims 1 to 60.

66. A computer program product, wherein the computer program product is stored in a non-volatile storage medium, and the computer program product is executed by at least one processor to implement the beam processing method according to any one of claims 1 to 60.
